# EUROPEAN PATENT APPLICATION

(11) **EP 4 371 765 A1**
(43) Date of publication of application: **22.05.2024**
(21) Application number: 22841988.3
(22) Date of filing: 04.07.2022
(51) Int. Cl.: B32B 27/00, B32B 27/30, B32B 27/36, C09J 11/06, C09J 163/00, C09J 175/04

(54) **ADHESIVE**

(30) Priority: 16.07.2021 JP 2021118102; 31.03.2022 JP 2022060433
(71) Applicant: DAINICHISEIKA COLOR & CHEMICALS MFG. CO., LTD., Chuo-ku Tokyo 103-8383 (JP)
(72) Inventor: IINO, Shota, Tokyo 103-8383 (JP); HIROSE, Masazumi, Tokyo 103-8383 (JP); MIWA, Yuya, Tokyo 103-8383 (JP); FUJIWARA, Koji, Tokyo 103-8383 (JP)
(74) Representative: dompatent von Kreisler Selting Werner - Partnerschaft von Patent- und Rechtsanwälten mbB
(86) International application number: PCT/JP2022/026554
(87) International publication number: WO 2023/286644

(57) **Abstract**

Provided is an adhesive containing a polyurethane resin (A), an epoxy resin (B), and an isocyanate crosslinking agent (C). The epoxy resin (B) contains a hydroxyl group-containing epoxy resin that has an epoxy equivalent of 450 g/eq or more and 3000 g/eq or less and that has a hydroxy group.

## Description

### CROSS-REFERENCE TO RELATED APPLICATION

This application claims priority to Japanese Patent Application No. 2021-118102 and Japanese Patent Application No. 2022-060433, the disclosures of which are incorporated herein by reference in their entirety.

### FIELD OF THE INVENTION

The present invention relates to an adhesive.

### BACKGROUND OF THE INVENTION

Conventionally, as adhesives for various plastics, polyurethane adhesives are often used due to the adhesive stability in a low temperature range (for example, -10°C to 15°C), the adhesion, flexibility and workability in a normal temperature range (25±10°C), and the easiness in various molecular designs.

As the polyurethane adhesive, for example, those used as follows are known.
(1) Ones containing a polyester polyol or an acrylic polyol as base resin and a polyisocyanate as crosslinking agent, which generate a urethane bond through progress of a crosslinking reaction between the base resin and the crosslinking agent for use.
(2) Ones containing a polyurethane having a certain degree of chain length (so-called polyurethane prepolymer) as base resin and an isocyanate crosslinking agent as crosslinking agent, which allows a crosslinking reaction to progress between the base resin and the crosslinking agent, so that curing is achieved for use.

An adhesive containing a polyurethane-urea resin with many urea bonds introduced into the system to replace urethane bonds instead of a polyurethane resin and further containing an epoxy resin is also known (for example, refer to the following Patent Literature 1).

Further, in addition to a urethane resin having a carboxyl group, an adhesive containing a phenoxy resin having a relatively high epoxy equivalent (for example, 5000 g/eq or more) and a trifunctional or higher epoxy resin is also known (for example, refer to the following Patent Literature 2).

Further, adhesives containing a polyurethane resin as base resin and an epoxy resin as crosslinking agent are also known (for example, refer to the following Patent Literature 3).

### CITATION LIST

### Patent Literature

Patent Literature 1: Japanese Patent No. 4806944
Patent Literature 2: Japanese Patent No. 6499860
Patent Literature 3: Japanese Patent No. 6578100

### SUMMARY OF THE INVENTION

### Technical Problem

The adhesive of these types is cured into a crosslinked structure for use to bond substrates (one substrate and another substrate) to each other. After bonding the substrates to each other, the adhesive of these types is desired to have excellent close contact to each of the substrates, and after curing, desired also to have excellent adhesion to each of the substrates.

The adhesive containing a polyurethane-urea resin described in Patent Literature 1 allows the polyurethane-urea resin to be crosslinked with an epoxy resin. However, due to containing a polyurethane-urea resin, the adhesive described in Patent Literature 1 tends to be hardened, resulting in poor workability. Therefore, such an adhesive containing a polyurethane-urea resin tends to be inferior to adhesives containing a polyurethane resin in initial close contact to substrates such as films made of various materials. In addition, since the adhesive described in Patent Literature 1 has properties sufficiently curing at a temperature of 100°C or more, sufficient adhesion to a substrate is not secured when the adhesive is cured at 60°C or less.

Further, since the adhesive of Patent Literature 2 has a curing temperature of 100°C or more, sufficient adhesion to a substrate is not secured when the adhesive is cured at 60°C or less, similarly to the adhesive of Patent Literature 1.

In Patent Literature 3, an insulating sheet produced by bonding a plurality of sheet materials together with an adhesive is described. However, the conditions for sufficiently curing the adhesive described in Patent Literature 3 include a treatment at 100°C for 12 hours. Accordingly, sufficient adhesion to a substrate is not secured when the adhesive of Patent Literature 3 is cured at 60°C or less, similarly to the adhesives of Patent Literature 1 and 2.

The present invention has been made in view of the problems of the conventional techniques, and an object thereof is to provide an adhesive having excellent close contact to a substrate before curing, and excellent adhesion to the substrate after curing.

### Solution to Problem

An adhesive according to the present invention includes: a polyurethane resin (A), an epoxy resin (B), and an isocyanate crosslinking agent (C), in which the epoxy resin (B) includes a hydroxyl group-containing epoxy resin that has an epoxy equivalent of 450 g/eq or more and 3000 g/eq or less and that has a hydroxy group.

### DETAILED DESCRIPTION OF THE PREFERRED EMBODIMENT

Hereinafter, a description will be given on embodiments of the present invention, though the present invention is not limited to the following embodiments. In the following first embodiment, an adhesive having excellent close contact to a substrate, and, after curing, having excellent adhesion to the substrate, with excellent heat resistance for a long period will be described. In the following second embodiment, an adhesive having excellent close contact to a substrate, and, after curing, having excellent adhesion to the substrate, with excellent hot water resistance, acid resistance and alcohol resistance will be described. The adhesive according to the second embodiment can be thermally press-bonded and can be used as a hot-melt adhesive.

Further, both the adhesive according to the first embodiment and the adhesive according to the second embodiment described below are used, for example, to form an adhesive layer on one substrate. The adhesive layer formed on one substrate is bonded to another substrate and then cured by heat to form a crosslinked structure, such that the substrates (the one substrate and the other substrate) are bonded to each other.

### (First embodiment)

The adhesive of the present embodiment includes a polyurethane resin (A), an epoxy resin (B), and an isocyanate crosslinking agent (C). In the adhesive of the present embodiment, the epoxy resin (B) includes a hydroxyl group-containing epoxy resin that has an epoxy equivalent of 450 g/eq or more and 3000 g/eq or less and that has a hydroxy group.

"Polyurethane resins" herein means "polyurethane resins" that contain substantially no urea bond, not meaning "polyurethane resins" in a broad sense that include "polyurethane-urea resins".

### (Polyurethane resin (A))

The polyurethane resin (A) is obtained through urethane-bonding of reaction components including a polyol component (a) having two or more hydroxyl groups in a molecule and a polyisocyanate component (b) having two or more isocyanate groups in a molecule.

The polyurethane resin (A) preferably includes a hydroxyl group-containing polyurethane resin having a hydroxyl group at a terminal to react with the isocyanate crosslinking agent (C). A hydroxyl value of the hydroxyl group-containing polyurethane resin is preferably 0.1 mg KOH/g or more and 20 mg KOH/g or less, more preferably 1 mg KOH/g or more and 15 mg KOH/g or less. In the adhesive according to the present embodiment, the polyurethane resin (A) and the epoxy resin (B) are preferably crosslinked with the isocyanate crosslinking agent (C). Specifically, in the adhesive according to the present embodiment, the polyurethane resin (A) and the epoxy resin (B) are preferably crosslinked with the isocyanate crosslinking agent (C) at a relatively low temperature (temperature of 60°C or less).

Further, the polyurethane resin (A) preferably includes a carboxyl group and includes an acid value of 5 mg KOH/g or more and 30 mg KOH/g or less. The acid value is more preferably 9 mg KOH/g or more and 25 mg KOH/g or less. Due to having a carboxyl group, the polyurethane resin (A) can react with the epoxy groups of the epoxy resin (B). Thereby, the adhesive in the present embodiment has excellent heat resistance. Further, since the polyurethane resin (A) has an acid value of 5 mg KOH/g or more, the adhesive of the present embodiment can have a relatively high crosslinking density after the crosslinking reaction between the polyurethane resin (A) and the epoxy resin (B). Thereby, a cured product obtained after the crosslinking reaction has excellent heat resistance for a long period. Further, since the polyurethane resin (A) has an acid value of 30 mg KOH/g or less, the adhesive of the present embodiment can suppress the crosslinking density from being excessively increased. Thereby, a cured product obtained after the crosslinking reaction is not too excessively inferior in flexibility, so that occurrence of distortion in the cured product can be suppressed. The acid value of the polyurethane resin (A) is obtained by dissolving the polyurethane resin (A) in methyl ethyl ketone (MEK) or the like and measuring the value according to the method of JIS K1557-5:2007.

By using the polyol component (a) or the polyisocyanate component (b), the polyurethane resin can have the carboxyl group.

By incorporating a hydroxyl group-containing compound (a1) in a polyol component (a), for example, the polyurethane resin (A) can have the carboxyl group. In that case, the polyol component (a) preferably contains a common polyol (a2) together with the hydroxyl group-containing compound (a1) having a carboxyl group.

The hydroxyl group-containing compound (a1) having a carboxyl group has two or more hydroxyl groups in one molecule. Due to having two or more hydroxyl groups in one molecule, the hydroxyl group-containing compound (a1) having a carboxyl group reacts with a polyisocyanate component (b) having two or more isocyanate groups in one molecule, so that a polyurethane resin can be obtained.

Examples of the hydroxyl group-containing compound (a1) having a carboxyl group include dimethylol propanoic acid, dimethylol butanoic acid, alkylene oxide low mole adducts thereof (number average molecular weight Mn: less than 500) and γ-caprolactone low mole adducts (number average molecular weight Mn: less than 500), half esters derived from an acid anhydride and glycerin, and compounds derived from free radical reaction between a monomer containing a hydroxyl group and an unsaturated group and a monomer containing a carboxyl group and an unsaturated group. These compounds may be used alone or in combination of 2 or more types. The number average molecular weight Mn herein means the value measured by the quantification method for terminal functional groups. The compounds described above are examples of preferred compounds used in the present invention, and the present invention is not limited to these exemplified compounds. Accordingly, any hydroxyl group-containing compounds (a1) having a carboxyl group including not only the compounds exemplified above but also other currently commercially available products which can be easily obtained from the market may be used in the present invention. Among these compounds, use of dimethylol propanoic acid or dimethylol butanoic acid is preferred, and use of dimethylol propanoic acid is particularly preferred.

As the polyol (a2), conventionally known polyols used in synthesizing polyurethane resins may be used. Specific examples of the polyol (a2) include polyester polyols, polyether polyols, polycarbonate polyols, and other polyols.

Examples of the polyester polyols include those obtained by condensation polymerization of aliphatic dicarboxylic acids (e.g., succinic acid, adipic acid, sebacic acid, glutaric acid, and azelaic acid) and/or aromatic dicarboxylic acids (e.g., isophthalic acid and terephthalic acid), with low molecular weight glycols (e.g., ethylene glycol, 1,2-propylene glycol, 1,3-propylene glycol, 1,4-butylene glycol, 1,6-hexamethylene glycol, neopentyl glycol, and 1,4-bishydroxymethylcyclohexane).

Specific examples of the polyester polyols include polyethylene adipate diol, polybutylene adipate diol, polyhexamethylene adipate diol, polyneopentyl adipate diol, polyethylene/butylene adipate diol, polyneopentyl/hexyl adipate diol, poly-3-methylpentane adipate diol, polybutylene isophthalate diol, polycaprolactone diol, and poly-3-methylvalerolactone diol. Polyester polyols are superior in heat resistance to polyether polyols. Accordingly, polyester polyols are more advantageous than polyether polyols in obtaining adhesives excellent in heat resistance.

Specific examples of polyether polyols include polyethylene glycol, polypropylene glycol, polytetramethylene glycol, and random/block copolymers thereof. Polyether polyols are superior in hydrolysis resistance to polyester polyols. Accordingly, polyether polyols are more advantageous than polyester polyols in obtaining adhesives excellent in hydrolysis resistance.

Specific examples of polycarbonate polyols include polytetramethylene carbonate diol, polypentamethylene carbonate diol, polyneopentyl carbonate diol, polyhexamethylene carbonate diol, poly(1,4-cyclohexanedimethylene carbonate) diol, and random/block copolymers thereof. By using the various polycarbonate diols described above as the polycarbonate polyol, the polyurethane resin (A) can have a carbonate diol structural unit. Polycarbonate polyols are excellent in hydrolysis resistance and heat resistance, and therefore can be suitably used as the polyols. Among polycarbonate polyols, polyhexamethylene carbonate is preferred from the viewpoints of cost and availability as material.

Specific examples of other polyols include a dimer diol and a hydrogenated product thereof, a polybutadiene polyol and a hydrogenated product thereof, a polyisoprene polyol and a hydrogenated product thereof, an acrylic polyol, an epoxy polyol, a polyether ester polyol, a siloxane-modified polyol, an α,ω-polymethyl methacrylate diol, α,ω-polybutyl methacrylate diol, and a siloxane-modified polyol. Among these, diols obtained from a hydrogenated product of a dimer diol and a hydrogenated product of a polybutadiene polyol are excellent in hydrolysis resistance and heat resistance as with a polycarbonate polyol, and therefore can be suitably used as polyols.

For these reasons, it is preferable to use a polycarbonate polyol as the polyol (a2) from the viewpoint of excellent hydrolysis resistance and heat resistance. Among the polycarbonate polyols, a polyhexamethylene carbonate is particularly preferably used from the viewpoints of cost and easy availability of the material.

The number average molecular weight Mn of the polyol (a2) (according to the quantification method for terminal functional groups) is preferably 500 or more and 6000 or less, though not particularly limited. With the number average molecular weight Mn of the polyol (a2) in the numerical range as described above, the adhesive of the present embodiment easily exhibits cohesion due to urethane bonds. Thereby, the adhesive of the present embodiment has high mechanical properties. With a too large number average molecular weight Mn of the crystalline polyol, the adhesive of the present embodiment formed into a coating film may have whitening in the coating film. Therefore, in the case of using a crystalline polyol alone as the polyol (a2), it is preferable to use one having a number average molecular weight Mn of 3000 or less. One type of the polyols (a2) may be used alone or two or more types may be used in combination.

As the polyol component (a), in addition to the polyol (a2), a short-chain diol (a3) may be used on an as needed basis. Specific examples of the short-chain diol (a3) include an aliphatic glycol such as ethylene glycol, 1,2-propylene glycol, 1,3-propylene glycol, 1,3-butylene glycol, 1,4-butylene glycol, 1,6-hexamethylene glycol, and neopentyl glycol, and an alkylene oxide low-molar adduct thereof (number average molecular weight Mn of less than 500, according to the quantification method for terminal functional groups); an alicyclic glycol such as 1,4-bishydroxymethylcyclohexane, 2-methyl-1,1-cyclohexane dimethanol and an alkylene oxide low molar adduct thereof (number average molecular weight Mn of less than 500, same as above); an aromatic glycol such as xylylene glycol and an alkylene oxide low molar adduct thereof (number average molecular weight Mn of less than 500, same as above); and a bisphenol such as bisphenol A, thiobisphenol and sulfonebisphenol and an alkylene oxide low molar adduct thereof (number average molecular weight Mn of less than 500, same as above). Among the short-chain diols (a3) described above, ethylene glycol, 1,3-propylene glycol, 1,3-butylene glycol, 1,4-butylene glycol, 1,6-hexamethylene glycol, and neopentyl glycol are preferably used, and ethylene glycol, 1,3-butylene glycol and 1,4-butylene glycol are particularly preferably used. These short-chain diols (a3) may be used alone or in combination of two or more.

In producing of the polyurethane resin (A), a polyhydric alcohol compound maybe used as the material of the polyurethane resin (A), similarly to the short-chain diol (a3). Specific examples of the polyhydric alcohol compound include glycerin, trimethylolethane, trimethylolpropane, pentaerythritol, tris-(2-hydroxyethyl)isocyanurate, 1,1,1-trimethylolethane, and 1,1,1 -trimethylolpropane.

As the polyisocyanate component (b), conventionally known polyisocyanate components used in the production of polyurethane resins may be used. Specific examples of the polyisocyanate component (b) include an aromatic diisocyanate such as toluene-2,4-diisocyanate, toluene-2,6-diisocyanate, a mixture thereof, 4-methoxy-1,3-phenylene diisocyanate, 4-isopropyl-1,3-phenylene diisocyanate, 4-chloro-1,3-phenylene diisocyanate, 4-butoxy-1,3-phenylene diisocyanate, 2,4-diisocyanate diphenyl ether, 4,4'-methylene bis(phenylene isocyanate) (MDI), a crude or polymeric MDI, dulylene diisocyanate, xylylene diisocyanate (XDI), 1,5-naphthalene diisocyanate, benzidine diisocyanate, o-nitrobenzidine diisocyanate, and 4,4-diisocyanate dibenzyl; an aliphatic diisocyanate such as methylene diisocyanate, 1, 4-tetramethylene diisocyanate, 1,6-hexamethylene diisocyanate, and 1,10-decamethylene diisocyanate; an alicyclic diisocyanate such as 1,4-cyclohexylene diisocyanate, 4,4'-methylene bis(cyclohexyl isocyanate), 1,5- tetrahydronaphthalene diisocyanate, isophorone diisocyanate, and hydrogenated XDI; and a polyurethane prepolymer obtained by reacting these diisocyanates with a low-molecular-weight polyol to form an isocyanate terminal.

Among these polyisocyanate components (b), an aromatic isocyanate is preferably used, and toluene-2,4-diisocyanate, toluene-2,6-diisocyanates, a mixture thereof, 4,4'-methylene bis(phenylene isocyanate) (MDI), and a crude or polymeric MDI are particularly preferably used from the viewpoint of obtaining an adhesive that is industrially stable, inexpensive, and excellent in heat resistance. By using an aromatic isocyanate as the polyisocyanate component (b), the polyurethane resin (A) can have an aromatic diisocyanate structural unit. These polyisocyanate components (b) may be used alone or in combination of two or more. An adhesive containing a polyurethane-urea resin, such as the adhesive of Patent Literature 1 has a cost problem, because the inexpensive polyisocyanate components described above are difficult to be used as material for the polyurethane-urea resin.

### (Method for producing polyurethane resin (A))

The polyurethane resin (A) can be produced by a conventionally known polyurethane production method. Specifically, first, in the presence or absence of an organic solvent containing no active hydrogen in the molecule, a composition for reaction including the hydroxyl group-containing compound (a1) having a carboxyl group, the polyol (a2), the polyisocyanate component (b) and a short-chain diol (a3) optionally used as chain extender on an as needed basis is reacted to obtain the polyurethane resin (A). The composition for reaction may be generally compounded to have an equivalent ratio between isocyanate groups and hydroxyl groups of 0.8 to 1.25. The reaction may be performed by a one-shot method or a multistage method at a temperature of usually 20 to 150°C, preferably 60 to 110°C.

The mass average molecular weight Mw of the polyurethane resin (A) obtained as described above is preferably 1000 or more and 100000 or less. With the mass average molecular weight Mw of the polyurethane resin (A) in the aforementioned numerical range, the polyurethane resin (A) exhibits properties such as flexibility, adhesiveness, and heat resistance more effectively. The mass average molecular weight Mw of the polyurethane resin (A) means a value measured by gel permeation chromatography (GPC). For example, the value may be measured using the following apparatuses and conditions.
(1) Equipment: trade name "HLC-8020" (manufactured by Tosoh Corporation)
(2) Columns: trade names "TSKgel G2000HXI,", "G3000HXL" and "G4000GXI," (manufactured by Tosoh Corporation)
(3) Solvent: THF
(4) Flow rate: 1.0 ml/min
(5) Sample concentration: 2 g/L
(6) Injection volume: 100 µL
(7) Temperature: 40°C
(8) Detector: model number "RI-8020" (manufactured by Tosoh Corporation)
(9) Standard material: TSK standard polystyrene (manufactured by Tosoh Corporation)

In the present embodiment, a catalyst can be used in synthesis of the polyurethane resin on an as needed basis. Examples of the catalyst include a salt of metal and an organic or inorganic acid such as dibutyltin laurate, dioctyltin laurate, stannous octoate, zinc octylate and tetra-n-butyl titanate, an organometallic derivative, an organic amine such as triethylamine, and a diazabicycloundecene catalyst. The catalyst accelerates the synthesis reaction of polyurethane resin. On the other hand, excessive use of the catalyst may induce a decomposition reaction that decomposes substances other than the polyurethane resin. As a result, the resulting adhesive may be inferior in the heat resistance in a high temperature range (for example, at 255°C) and in the heat resistance for a long period. Accordingly, in the case of using the catalyst, it is preferable to use an appropriate amount of the catalyst.

The polyurethane resin (A) may be synthesized without use of an organic solvent, or may be synthesized with use of an organic solvent. As the organic solvent, an organic solvent that is inert to isocyanate groups or an organic solvent that is less active to isocyanate groups than the reaction components can be used. Specific examples of the organic solvent include a ketone solvent such as acetone, methyl ethyl ketone, methyl isobutyl ketone and cyclohexanone; an aromatic hydrocarbon solvent such as toluene, xylene, Swazole (trade name, manufactured by Cosmo Oil Co., Ltd.) and Solvesso (trade name, manufactured by ExxonMobil Chemical Company); an aliphatic hydrocarbon solvent such as n-hexane; an alcohol solvent such as methanol, ethanol and isopropyl alcohol; an ether solvent such as dioxane and tetrahydrofuran; an ester solvent such as ethyl acetate, butyl acetate and isobutyl acetate; a carbonate ester solvent such as dimethyl carbonate, diethyl carbonate and ethylene carbonate; a glycol ether ester solvent such as ethylene glycol ethyl ether acetate, propylene glycol methyl ether acetate, 3-methyl-3-methoxybutyl acetate and ethyl-3-ethoxypropionate; an amide solvent such as dimethylformamide and dimethylacetamide; and a lactam solvent such as N-methyl-2-pyrrolidone. In particular, toluene and methyl ethyl ketone are preferred from the viewpoint of enhancing solubility of the polyurethane resin and the viewpoint of enhancing drying properties of the adhesive.

### (Epoxy resin (B))

In the adhesive of the present embodiment, the epoxy resin (B) is contained in an amount of preferably 10 parts by mass or more and 100 parts by mass or less, more preferably 20 parts by mass or more and 80 parts by mass or less, based on 100 parts by mass of the polyurethane resin (A). With the content of the epoxy resin (B) being 10 parts by mass or more, the adhesive of the present embodiment can achieve sufficient heat resistance. Further, with the content of the epoxy resin (B) being 100 parts by mass or less, the adhesive of the present embodiment can sufficiently exhibit the flexibility derived from a urethane resin system. Thereby, the adhesive of the present embodiment is prevented from becoming too hard and brittle after curing (after crosslinking reaction).

In the adhesive of the present embodiment, as described above, the epoxy resin (B) contains a hydroxyl group-containing epoxy resin that has an epoxy equivalent of 450 g/eq or more and 3000 g/eq or less and that has a hydroxy group. With the epoxy equivalent in the aforementioned numerical range, the adhesive of the present embodiment exhibits excellent adhesion to a substrate at a relatively low temperature (for example, 60°C or less).

The hydroxyl value is preferably 50 mg KOH/g or more and 250 mg KOH/g or less, more preferably 100 mg KOH/g or more and 220 mg KOH/g or less. With a hydroxyl value of 50 mg KOH/g or more, the crosslinking density can be further increased after the hydroxyl group-containing epoxy resin is subjected to a crosslinking reaction with the isocyanate crosslinking agent (C). Thereby, a cured product obtained after the crosslinking reaction can be made more excellent in heat resistance for a long period. Further, with a hydroxyl value of 250 mg KOH/g or less, the crosslinking density can be prevented from becoming too high. Thereby, a cured product obtained after the crosslinking reaction can be prevented from becoming too inferior in flexibility and causing distortion in the cured product. Furthermore, with a hydroxyl value of 250 mg KOH/g or less, the amount of unreacted hydroxyl groups can be relatively reduced. As a result, deterioration of the long-term durability of the adhesive of the present embodiment due to reaction of a relatively large number of remaining unreacted hydroxyl groups with moisture in the atmosphere can be suppressed.

As the epoxy resin (B), a bisphenol A type epoxy resin, a bisphenol F type epoxy resin, and a bisphenol S type epoxy resin can be used alone or in combination of two or more.

As the epoxy resin (B), in addition to the above, a phenoxy resin, a phenol novolac type epoxy resin, or a rubber modified epoxy resin can be used in combination.

It is preferable that the epoxy resin (B) be dissolved in an organic solvent and then mixed with the polyurethane resin (A).

Specific examples of the organic solvent include a ketone solvent such as acetone, methyl ethyl ketone, methyl isobutyl ketone and cyclohexanone; an aromatic hydrocarbon solvent such as toluene, xylene, Swazole (trade name, manufactured by Cosmo Oil Co., Ltd.) and Solvesso (trade name, manufactured by ExxonMobil Chemical Company); an aliphatic hydrocarbon solvent such as n-hexane; an alcohol solvent such as methanol, ethanol and isopropyl alcohol; an ether solvent such as dioxane and tetrahydrofuran; an ester solvent such as ethyl acetate, butyl acetate and isobutyl acetate; a carbonate ester solvent such as dimethyl carbonate, diethyl carbonate and ethylene carbonate; a glycol ether ester solvent such as ethylene glycol ethyl ether acetate, propylene glycol methyl ether acetate, 3-methyl-3-methoxybutyl acetate and ethyl-3-ethoxypropionate; an amide solvent such as dimethylformamide and dimethylacetamide; and a lactam solvent such as N-methyl-2-pyrrolidone. In particular, toluene and methyl ethyl ketone are preferred from the viewpoint of the solubility of epoxy resins and the drying properties of adhesives. Further, toluene and methyl ethyl ketone are preferred from the viewpoint that isocyanate groups are hardly deactivated in comparison with alcohol solvents.

### (Isocyanate crosslinking agent (C))

In the adhesive of the present embodiment, the isocyanate crosslinking agent (C) is preferably contained in an amount of 2 parts by mass or more and 50 parts by mass or less based on 100 parts by mass in total of the polyurethane resin (A) and the epoxy resin (B). With the content of the isocyanate crosslinking agent (C) in the aforementioned numerical range, excessive progress of the crosslinking reaction can be suppressed. Thereby, in the case where the adhesive of the present embodiment is applied to a substrate or the like to form a coating film, the coating film can be prevented from becoming hard and brittle. In other words, deterioration of the toughness of the coating film can be suppressed. As a result, the adhesive of the present embodiment has sufficient properties as an adhesive.

The isocyanate crosslinking agent (C) is not particularly limited, and a conventionally known and used one having a polyfunctional isocyanate group made into an isocyanurate form, a biuret form, an adduct form, or a polymeric form may be used. Examples thereof include a dimer of 2,4-toluylene diisocyanate, triphenylmethane triisocyanate, tris-(p-isocyanato phenyl)thiophosphite, a polyfunctional aromatic isocyanate, a polyfunctional aromatic-aliphatic isocyanate, a polyfunctional aliphatic isocyanate, a fatty acid-modified polyfunctional aliphatic isocyanate, a blocked polyisocyanate such as blocked polyfunctional aliphatic isocyanate, and a polyisocyanate prepolymer.

Among these isocyanate crosslinking agents (C), preferred aromatic examples include diphenylmethane diisocyanate and tolylene diisocyanate, and preferred aliphatic examples include a modified compound such as hexamethylene diisocyanate and isophorone diisocyanate. As the isocyanate crosslinking agent (C), one containing three or more isocyanate groups in a molecule is preferred. Further, as the isocyanate crosslinking agent (C), a polymer of the polyisocyanate, an adduct thereof with another compound, and a urethane prepolymer obtained by reacting a low-molecular-weight polyol and polyamine to have a terminal isocyanate are also preferably used. Examples of the preferred form of the isocyanate crosslinking agent (C) include compounds represented by the following formulas (1) to (8). The isocyanate crosslinking agent (C) is not limited thereto, though.

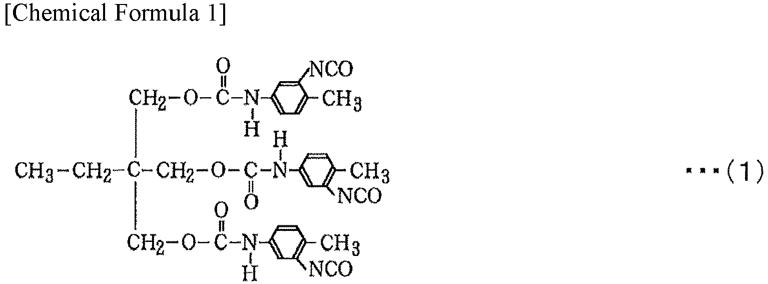

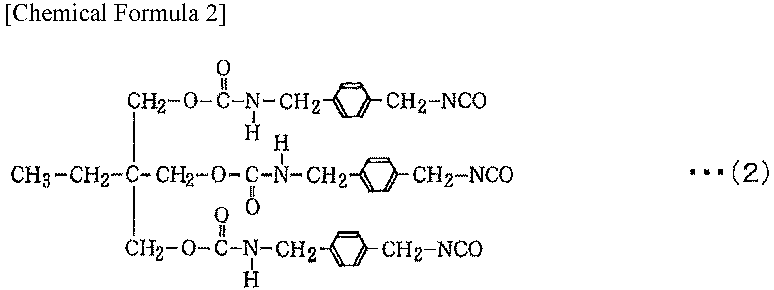

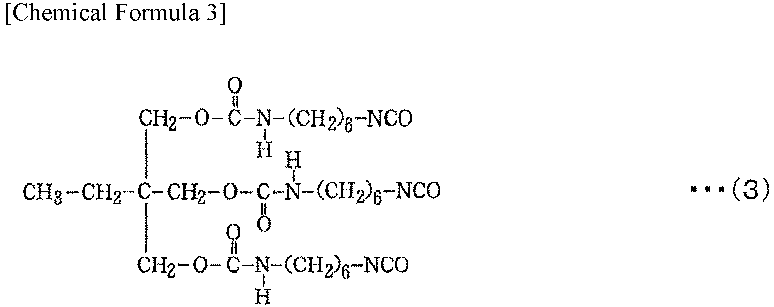

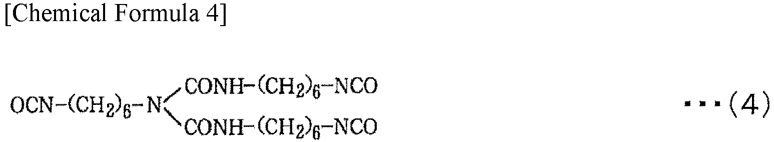

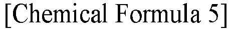

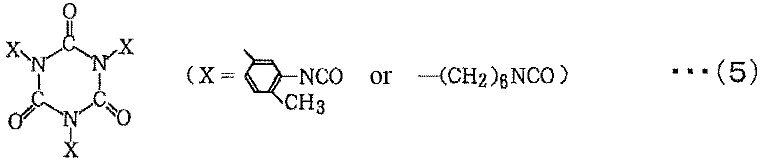

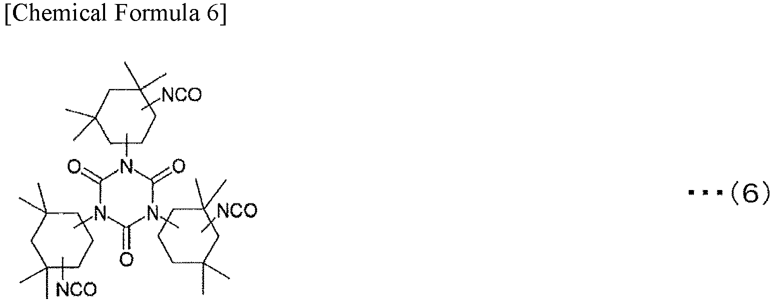

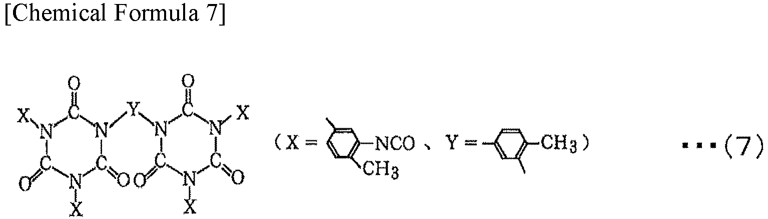

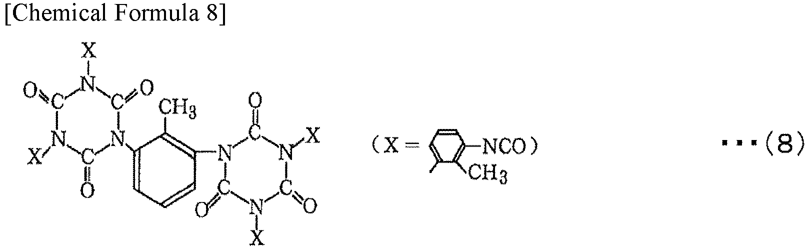

According to the adhesive of the present embodiment, the temperature at which a mass change of 50 mass% is observed in thermogravimetric differential thermal analysis (TG-DTA) is preferably 300°C or more. According to the adhesive of the present embodiment, the temperature at which a mass change of 50 mass% is observed in thermogravimetric differential thermal analysis (TG-DTA) is more preferably 350°C or more. The temperature at which a mass change of 50 mass% is observed can be determined according to the following procedure.
(1) An adhesive diluted to a solid content of 30% with methyl ethyl ketone (MEK) is applied to the entire surface of one side of a release paper, and then dried at 100°C for 1 minute, so that a release paper having an adhesive layer is prepared. The application is performed such that the adhesive layer after drying has a thickness of 12 µm.
(2) The release paper having an adhesive layer is left in an oven at a predetermined temperature for a predetermined period of time to allow the curing reaction to proceed in the adhesive layer. After allowing the curing reaction to proceed, the release paper is peeled off, separated from the adhesive layer.
(3) Using a thermogravimetric differential thermal analyzer (TG8120, manufactured by Rigaku Corporation), the temperature is raised from normal temperature (23±2°C) at 5°C/min in an atmosphere of 100 ml/min of air, so that a TG-DTA curve of the adhesive layer peeled from the release paper is obtained. The temperature at which the mass is reduced by 50% (50% mass loss temperature) is then read.

The adhesive of the present embodiment may further contain additives on an as needed basis. Examples of the additives include antioxidants (hindered phenols, phosphites, thioethers, etc.), light stabilizers (hindered amines, etc.), UV absorbers (benzophenones, benzotriazoles, etc.), gas discoloration stabilizers (hydrazines, etc.), and metal deactivators. These additives may be used alone or in combination of two or more.

The adhesive of the present embodiment can be obtained by mixing the polyurethane resin (A), the epoxy resin (B), and the isocyanate crosslinking agent (C). As described above, it is preferable that the epoxy resin (B) in an amount of 10 parts by mass or more and 100 parts by mass or less be mixed with 100 parts by mass of the polyurethane resin (A). Further, as described above, it is preferable that the isocyanate crosslinking agent (C) in an amount of 2 parts by mass or more and 50 parts by mass or less be mixed with 100 parts by mass in total of the polyurethane resin (A) and the epoxy resin (B).

The adhesive of the present embodiment obtained as described above is preferably used for bonding a resin film (plastic film). The adhesive of the present embodiment is more preferably used for bonding at least one resin film selected from the group consisting of a polyethylene terephthalate film, a polyethylene naphthalate film and a polybutylene terephthalate film among the plastic films. The adhesive of the present embodiment is still more preferably used for bonding at least one resin film selected from the group consisting of a polyethylene terephthalate film, a polyethylene naphthalate film and a polybutylene terephthalate film, to an aramid paper. Specifically, it is preferable that the adhesive of the present embodiment be used as an adhesive for making an insulating sheet having a three-layer structure by bonding the aramid paper to one side of the resin film as described above, or as an adhesive for making an insulating sheet having a five-layer structure by bonding the aramid paper to both sides of the resin film as described above. Further, the insulating sheet is preferably used as an insulating sheet for a motor for eco-cars such as electric vehicles (EV) and hybrid electric vehicles (HEV). The aramid paper is a paper-like sheet composed mainly of wholly aromatic polyamide fiber. As such aramid paper, a sheet-like product mainly composed of fiber of resin material including benzene rings in addition to an amide group (wholly aromatic polyamide fiber) such as a condensation polymer of phenylenediamine and phthalic acid can be used.

The adhesive of the present embodiment can be applied to a substrate by various conventionally known application methods such as gravure and spraying. Then, in the state of a coating film applied to the substrate, an effect of excellent close contact to the substrate is exhibited before curing, and effects of excellent heat resistance for a long period and excellent adhesion to the substrate are exhibited after curing. Regarding the coating mass, it is preferable that the adhesive be applied such that the coating film has a thickness of 1 µm or more and 50 µm or less after drying.

In the case of using the adhesive of the present embodiment as an insulating sheet having a three-layer structure or an insulating sheet having a five-layer structure as described above, it is preferable that the adhesive contain no conductive filler. The conductive filler means a filler composed of conductive metal such as gold, silver, copper, zinc, iron and nickel or an alloy thereof, and a filler composed of carbon material such as carbon black, carbon nanotube, and graphite.

### (Second embodiment)

Next, the adhesive of the second embodiment of the present invention will be described. As described above, the adhesive of the present embodiment is an adhesive having excellent close contact to a substrate, and, after curing, having excellent adhesion to the substrate, with excellent hot water resistance, acid resistance and alcohol resistance. The adhesive of the present embodiment can be thermally press-bonded and can be used as a hot-melt adhesive.

The adhesive of the present embodiment contains a polyurethane resin (A), an epoxy resin (B), and an isocyanate crosslinking agent (C), as with the adhesive of the first embodiment described above. As with the adhesive of the first embodiment described above, in the adhesive of the present embodiment, the epoxy resin (B) contains a hydroxyl group-containing epoxy resin that has an epoxy equivalent of 450 g/eq or more and 3000 g/eq or less and that has a hydroxy group. On the other hand, in the adhesive of the present embodiment, the polyurethane resin (A) has a structural unit derived from a polyol (a1) with a skeleton having 8 or more carbon atoms. The adhesive of the present embodiment is different from the adhesive of the first embodiment described above in terms of the features. The adhesive of the present embodiment is used as a hot-melt adhesive containing a crosslinked product of an adhesive composition containing a crosslinking agent.

### (Polyurethane resin (A))

In the present embodiment, the polyurethane resin (A) has a structural unit derived from a polyol (a1) with a skeleton having 8 or more carbon atoms as the polyol component (a), as described above.

As with the first embodiment, the polyurethane resin (A) preferably contains a hydroxyl group-containing polyurethane resin having a hydroxyl group. Further, it is preferable that the hydroxyl group-containing polyurethane resin have a hydroxyl group at a terminal. The hydroxyl value of the hydroxyl group-containing polyurethane resin is preferably 0.1 mg KOH/g or more and 20 mg KOH/g or less, more preferably 1 mg KOH/g or more and 15 mg KOH/g or less.

In the adhesive of the present embodiment also, as in the first embodiment, the polyurethane resin (A) and the epoxy resin (B) are crosslinked with the isocyanate crosslinking agent (C). Specifically, in the adhesive of the present embodiment also, the polyurethane resin (A) and the epoxy resin (B) are crosslinked with the isocyanate crosslinking agent (C) at a relatively low temperature (temperature of 60°C or less). In other words, in the adhesive of the present embodiment, the polyurethane resin (A) and the epoxy resin (B) crosslinked with the isocyanate crosslinking agent (C) at a relatively low temperature (temperature of 60°C or less) are contained. The state of the polyurethane resin (A) and the epoxy resin (B) crosslinked with the isocyanate crosslinking agent (C) allows thermally press-bonding to be easily performed.

It is preferable that the polyol component (a) contain a common polyol (a2) together with a polyol (a1) with a skeleton having 8 or more carbon atoms. In the following, a common polyol (a2) may be simply referred to as polyol (a2). The polyol (a1) with a skeleton having 8 or more carbon atoms herein means a polyol having 8 or more carbon atoms between hydroxyl groups. The 8 or more carbon atoms between hydroxyl groups may be bonded through a heteroatom, and the neighboring carbon atoms may have a saturated bond or an unsaturated bond. The polyol (a1) with a skeleton having 8 or more carbon atoms is preferably a polycarbonate polyol. Further, in the polyol (a1) with a skeleton having 8 or more carbon atoms, the number of heteroatoms contained in the portion containing 8 or more carbon atoms is preferably 2 or less. Further, it is preferable that in the molecule of the polyol (a1) with a skeleton having 8 or more carbon atoms, a residue with a plurality of hydrogen atoms removed from a saturated or unsaturated hydrocarbon with 8 or more carbon atoms be present. Further, the polyol (a1) with a skeleton having 8 or more carbon atoms preferably has an alkylene group with 6 or more carbon atoms.

Examples of the polyol (a1) with a skeleton having 8 or more carbon atoms include a polyester polyol obtained by condensation polymerization of monomers including a dicarboxylic acid (sebacic acid (having 10 carbon atoms), azelaic acid (having 9 carbon atoms), isophthalic acid (having 8 carbon atoms), terephthalic acid (having 8 carbon atoms), etc., and a glycol (1,9-nonanediol (having 9 carbon atoms), 1,4-bishydroxymethylcyclohexane (having 8 carbon atoms), etc.

Examples of the polyol (a1) with a skeleton having 8 or more carbon atoms include a polycarbonate polyol such as poly(1,4-cyclohexanedimethylene carbonate)diol (having 8 carbon atoms), polyoctamethylene carbonate diol (having 8 carbon atoms), polynonamethylene carbonate diol (having 9 carbon atoms) and polydecamethylene carbonate diol (having 10 carbon atoms), and a random/block copolymer of monomers containing these.

Examples of the polyol (a1) with a skeleton having 8 or more carbon atoms include also polyols derived from a dimer acid. The dimer acid is a dicarboxylic acid having 36 carbon atoms obtained by dimerizing an unsaturated fatty acid having 18 carbon atoms such as oleic acid and linoleic acid, which is a plant-derived fatty acid. A typical structure of the dimer acid is represented by the following formula (9). The dimer acid may contain a trimer acid. The trimer acid is a tricarboxylic acid having 54 carbon atoms obtained by trimerizing the unsaturated fatty acid having 18 carbon atoms, and is also produced as a by-product during production of a dimer acid. A commercially available dimer acid usually contains a trimer acid.

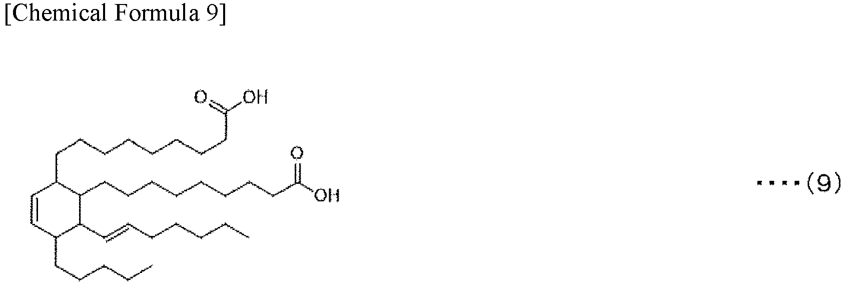

A dimer diol, which is a polyol derived from a dimer acid, is a polyol having 36 carbon atoms obtained by reducing the carboxy group of the dimer acid to a hydroxyl group. The polyol may or may not have an unsaturated bond in the molecule. Specific examples of such a dimer polyol include a dimer diol. A trimer triol is also a polyol obtained by reducing the carboxyl group of a trimer acid to a hydroxyl group. A commercially available dimer diol usually contains a trimer triol. Accordingly, a dimer acid-derived polyol, a dimer polyol and a dimer diol may contain a trimer triol.

Examples of the polyol (a1) with a skeleton having 8 or more carbon atoms include also a polyolefin polyol. A polyolefin polyol is a polymer having one or more polyolefins with a plurality of hydroxyl groups polymerized with each other. Specific examples of the polyolefin polyol include polyethylene butylene diol, polybutadiene diol, and hydrogenated polybutadiene diol. These polyols have extremely long carbon chains, because the carbon chains are polymerized with each other.

In the adhesive of the present embodiment, the polyurethane resin (A) has a structural unit derived from the polyol (a1) with a skeleton having 8 or more carbon atoms as described above, so that the adhesive of the present embodiment can have more improved hydrophobicity in comparison with ones having no structural unit derived from the polyol (a1) with a skeleton having 8 or more carbon atoms. As a result, the adhesive of the present embodiment is excellent in the hot water resistance, acid resistance, and alcohol resistance.

As the polyol (a2), a conventionally known polyol used in synthesizing polyurethane resins can be used. Specifically, the same ones as exemplified in the item on the polyol (a2) in the first embodiment can be used. Although a polyester polyol is exemplified as the polyol (a2) of the first embodiment, the polyester polyol may be copolymerized with a dicarboxylic acid or glycol having 8 or more carbon atoms. Although a polycarbonate polyol is also exemplified as the polyol (a2) of the first embodiment, the polycarbonate polyol may be copolymerized with a diol having 8 or more carbon atoms.

The polyol (a1) is preferably blended at a ratio of 10 mass% or more and 60 mass% or less based on 100 mass% of the polyol component (a). With the polyol (a1) blended at a ratio of 10 mass% or more, the hot-melt adhesive according to the present embodiment can have sufficient hot water resistance, acid resistance, and alcohol resistance. Further, with the polyol (a1) blended at a ratio of 60 mass% or less, the compatibility between the urethane resin (A) and the epoxy resin (B) is improved, and the resulting hot-melt adhesive is excellent in close contact to a polyethylene terephthalate film, a polyethylene naphthalate film, a polybutylene terephthalate film, and a resin film formed of perfluorocarbon sulfonic acid resin. In the case where the polyol component (a) is a copolymer of a monomer with a skeleton having 8 or more carbon atoms and a monomer with a skeleton having 7 or less carbon atoms, the part by mass of the monomer with a skeleton having 8 or more carbon atoms is calculated as the part by mass of the polyol (a1), and the part by mass of the monomer with a skeleton having 7 or less carbon atoms is calculated as the part by mass of the polyol (a2).

As the polyol component (a), in addition to the polyol (a1) and the polyol (a2), a short-chain diol (a3) can be used on an as needed basis. Specifically, the same ones as exemplified in the item on the short-chain diol (a3) in the first embodiment can be used.

In producing the polyurethane resin (A), a polyhydric alcohol compound can also be used as the material of the polyurethane resin (A), similarly to the short-chain diol (a3). Specifically, the same compounds as exemplified in the item on the polyhydric alcohol compounds in the first embodiment can be used.

Further, in the adhesive according to the present embodiment (adhesive according to the second embodiment), a hydroxyl group-containing compound having a carboxyl group (a4) may be used on an as needed basis. The hydroxyl group-containing compound having a carboxyl group (a4) usually has two or more hydroxyl groups in one molecule. The hydroxyl group-containing compound having a carboxyl group (a4) usually has two or more hydroxyl groups in one molecule, so that the compound reacts with the polyisocyanate component having two or more isocyanate groups in one molecule (b) to produce a polyurethane resin.

Examples of the hydroxyl group-containing compound having a carboxyl group (a4) include dimethylolpropanoic acid, dimethylolbutanoic acid, an alkylene oxide low mole adduct thereof (number average molecular weight Mn: less than 500), and a γ-caprolactone low mole adduct (number average molecular weight Mn: less than 500), half esters derived from acid anhydrides and glycerin, and a compound derived from a free radical reaction between a monomer containing a hydroxyl group and an unsaturated group and a monomer containing a carboxyl group and an unsaturated group. Among these various compounds, dimethylolpropanoic acid and dimethylolbutanoic acid are preferably used, and dimethylolpropanoic acid is particularly preferably used. These compounds may be used alone or may be used in combination of two or more. The number average molecular weight Mn means a value measured by the quantification method for terminal functional groups. The various compounds described above are examples of preferred compounds in the present invention. Accordingly, the hydroxyl group-containing compound (a4) having a carboxyl group for use in the present invention is not limited to the various compounds described above. Accordingly, in addition to the various compounds described above, any hydroxyl group-containing compound (a4) having a carboxyl group that is currently commercially available and readily available on the market may be used in the present invention.

As the polyisocyanate component (b), a conventionally known polyisocyanate component used in the production of polyurethane resins can be used. Specifically, the same ones as exemplified in the item on the isocyanate component (b) in the first embodiment can be used.

### (Method for producing polyurethane resin (A))

The polyurethane resin (A) of the present embodiment can be produced in the same manner as with the polyurethane resin (A) of the first embodiment, except that the hydroxyl group-containing compound (a1) having a carboxyl group is replaced with a polyol (a1) with a skeleton having 8 or more carbon atoms. In the production of the polyurethane resin (A) of the present embodiment also, a hydroxyl group-containing compound having a carboxyl group may be used on an as needed basis.

The mass average molecular weight Mw of the polyurethane resin (A) obtained as described above is preferably 1000 or more and 100000 or less as with the polyurethane resin (A) of the first embodiment. The mass average molecular weight Mw of the polyurethane resin (A) of the present embodiment can also be measured in the same manner as described in the item on the first embodiment.

### (Epoxy resin (B))

In the hot-melt adhesive according to the present embodiment, the ratio of the epoxy resin (B) contained in the adhesive composition is 10 parts by mass or more and 100 parts by mass or less, more preferably 20 parts by mass or more and 80 parts by mass or less, based on 100 parts by mass of the polyurethane resin (A). With the ratio of the epoxy resin (B) being 10 parts by mass or more, the resulting adhesive exhibits sufficient close contact to a polyethylene terephthalate film, a polyethylene naphthalate film, a polybutylene terephthalate film, and a resin film formed of perfluorocarbon sulfonic acid resin, in addition to sufficient hot water resistance, acid resistance, and alcohol resistance. Further, with the ratio of the epoxy resin (B) being 100 parts by mass or less, the resulting adhesive can sufficiently exhibit the flexibility derived from the urethane resin system. Accordingly, the resulting adhesive can be prevented from becoming too hard after curing (after crosslinking reaction) for hot-melt adhesion.

In the hot-melt adhesive of the present embodiment, as described above, the epoxy resin (B) contains a hydroxyl-containing epoxy resin that has an epoxy equivalent of 450 g/eq or more and 3000 g/eq or less and that has a hydroxy group. With the epoxy equivalent in the aforementioned numerical range, the adhesive of the present embodiment has excellent close contact to a substrate, cures at a relatively low temperature (for example, 60°C or less), and can be thermally press-bonded after curing (after crosslinking reaction). The epoxy equivalent can be determined according to JIS K 7236.

The hydroxyl value is preferably 50 mg KOH/g or more and 250 mg KOH/g or less, more preferably 100 mg KOH/g or more and 220 mg KOH/g or less. With a hydroxyl value of 50 mg KOH/g or more, the crosslinking density can be further increased after the crosslinking reaction of the hydroxyl group-containing epoxy resin and the polyurethane resin (A) with the isocyanate crosslinking agent (C). Thereby, the adhesive as a cured product obtained after the crosslinking reaction can be more excellent in hot water resistance, acid resistance, and alcohol resistance. Further, with a hydroxyl value of 250 mg KOH/g or less, the crosslinking density can be prevented from becoming too high. As a result, the adhesive as a cured product obtained after the crosslinking reaction can be prevented from becoming excessively inferior in flexibility, so that thermally press-bonding can be performed without difficulty. Further, with a hydroxyl value of 250 mg KOH/g or less, the number of unreacted hydroxyl groups can be relatively reduced. Thereby, deterioration of the hot water resistance, acid resistance, and alcohol resistance resulting from the action of a relatively large number of remaining unreacted hydroxyl groups with hot water and water contained in the acid can be suppressed.

As the epoxy resin (B), the same one as described in the first embodiment can be used.

As described in the first embodiment, it is preferable that the epoxy resin (B) dissolved in an organic solvent be mixed with the polyurethane resin (A).

Specific examples of the organic solvent include those exemplified in the first embodiment.

### (Isocyanate crosslinking agent (C))

In the hot-melt adhesive of the present embodiment, the ratio of the isocyanate crosslinking agent (C) contained in the adhesive composition is preferably 2 parts by mass or more and 50 parts by mass or less based on 100 parts by mass in total of the polyurethane resin (A) and the epoxy resin (B). With the content of the isocyanate crosslinking agent (C) in the aforementioned numerical range, in the case where the adhesive composition is applied to form a coating film as adhesive, the coating film is prevented from becoming hard and brittle, so that difficulty in thermally press-bonding can be suppressed. Thereby, the adhesive of the present embodiment has sufficient thermally press-bonding properties (hot melt properties).

Examples of the isocyanate crosslinking agent (C) include those exemplified in the first embodiment.

The adhesive of the present embodiment may further contain additives on an as needed basis. Examples of the additive include those exemplified in the first embodiment.

The adhesive of the present embodiment obtained as described above is preferably used for bonding a member at least a surface of which is made of resin. The resin is preferably at least one selected from the group consisting of a polyethylene terephthalate resin, a polyethylene naphthalate resin, and a polybutylene terephthalate resin. The member may be a resin film (plastic film). In the case where the member is a resin film, the resin film is preferably at least one selected from the group consisting of a polyethylene terephthalate film, a polyethylene naphthalate film, and a polybutylene terephthalate film.

Further, the adhesive of the present embodiment is preferably used for bonding a first member and a second member, and at least the surface to be bonded of each of the first member and the second member is preferably made of resin. The resin in the first member is preferably at least one selected from the group consisting of a polyethylene terephthalate resin, a polyethylene naphthalate resin, and a polybutylene terephthalate resin. The resin in the second member is preferably a perfluorocarbonsulfonic acid resin. The first member and the second member may be resin films (plastic films). In the case where the first member is a resin film, the resin film is preferably at least one first resin film selected from the group consisting of a polyethylene terephthalate film, a polyethylene naphthalate film, and a polybutylene terephthalate film. In the case where the second member is a resin film, the resin film is preferably a film made of perfluorocarbonsulfonic acid resin.

Examples of the perfluorocarbonsulfonic acid resin include "Nafion", which is a trade name, manufactured by DuPont Inc., "Flemion", which is a trade name, manufactured by Asahi Kasei Corporation, and "Aciplex", which is a trade name, manufactured by Asahi Glass Co., Ltd. The perfluorocarbonsulfonic acid resin is, for example, a resin having a polymer structure represented by the following formula (1). Regarding m, n, and x in the following formula (1), for example, m≥1, n=2, and x=5 to 13.5 in "Nafion" described above, and m=0 or 1, n=2 to 5, and x=1.5 to 14 in "Aciplex" described above, and m=0 or 1, and n=1 to 5 in "Flemion" described above.

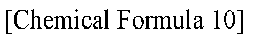

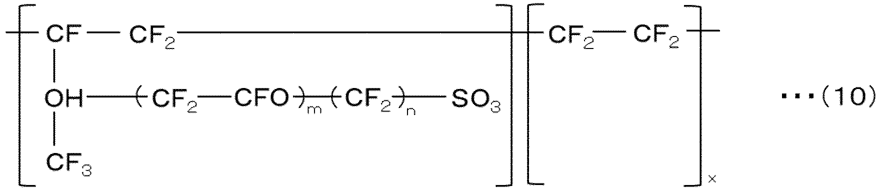

As described in the first embodiment, a resin solution containing an organic solvent such as toluene and methyl ethyl ketone in addition to the polyurethane resin (A), the epoxy resin (B) and the isocyanate crosslinking agent (C) is applied to a resin film (for example, the first resin film) to a predetermined thickness and dried to obtain the adhesive of the present embodiment in a sheet form.

The adhesive processed into a sheet form is then cured at a relatively low temperature (a temperature of 60°C or less) with the polyurethane resin (A) and the epoxy resin (B) crosslinked with the isocyanate crosslinking agent (C).

As a result, the adhesive processed into a sheet form can be stored on the resin film for a long period with the quality maintained.

Further, the polyurethane resin (A) and the epoxy resin (B) are cured into a crosslinked state with the isocyanate crosslinking agent (C), without having excessive tack.

Due to the above, such an adhesive is excellent in handleability.

Further, the polyurethane resin (A) and the epoxy resin (B) are cured into a crosslinked state with the isocyanate crosslinking agent (C), so that the adhesive is easily thermally press-bonded with excellent close contact to a substrate, and exhibits excellent hot water resistance, acid resistance, and alcohol resistance.

After the adhesive of the present embodiment is applied to a resin film, dried, and then cured in a crosslinked state at a relatively low temperature (temperature of 60°C or less), that is, after the adhesive is cured on the resin film into an adhesive layer state, it is preferable that one adhesive layer in contact with another adhesive layer be thermally press-bonded (hot melt bonding) by heating at a temperature of 120°C to 180°C.

Further, after the adhesive of the present embodiment is applied to a resin film, dried, and then cured in a crosslinked state at a relatively low temperature (temperature of 60°C or less), that is, after the adhesive is cured on the resin film into an adhesive layer state, it is preferable that a resin film formed of perfluorocarbonsulfonic acid resin overlayed on an exposed surface of the adhesive layer (a surface not in contact with the resin film) be heated at a temperature of 120°C to 180°C, so that the adhesive layer is thermally press-bonded (hot melt bonding) to the resin film formed of the perfluorocarbonsulfonic acid resin.

Further, the adhesive of the present embodiment may be attached to a solid electrolyte membrane made of perfluorocarbonsulfonic acid resin in a solid polymer electrolyte fuel cell for use. Specifically, in a membrane/electrode assembly (MEA) including a positive electrode and a negative electrode laminated on both sides of a solid electrolyte membrane opposed to each other, respectively, with planar dimensions smaller than those of the solid electrolyte membrane, the adhesive may be attached to the solid electrolyte membrane exposed at the outer peripheral edge of the membrane/electrode assembly (MEA) for use. Further, the adhesive may be attached to the solid electrolyte membrane exposed at the outer peripheral edge of the membrane/electrode assembly (MEA), such that the solid electrolyte membrane is held from both sides with two resin sheets each having an adhesive layer. In other words, the two resin sheets each having an adhesive layer may constitute a subgasket.

In the present specification, the disclosure includes the following.

(1) An adhesive containing a polyurethane resin (A), an epoxy resin (B), and an isocyanate crosslinking agent (C), in which the epoxy resin (B) contains a hydroxyl group-containing epoxy resin that has an epoxy equivalent of 450 g/eq or more and 3000 g/eq or less and that has a hydroxy group.

According to such a configuration, the adhesive has excellent close contact to a substrate before curing, and has excellent adhesion to the substrate after curing. Further, after curing, the adhesive is excellent in heat resistance for a long period.

(2)
The adhesive according to the item (1), in which the hydroxyl group-containing epoxy resin has a hydroxyl value of 50 mg KOH/g or more and 250 mg KOH/g or less.

According to such a configuration, the adhesive is more excellent in close contact to a substrate before curing, and more excellent in adhesion to the substrate after curing. Further, the adhesive is even more excellent in heat resistance for a long period.

(3)
The adhesive according to the item (1) or (2), in which a temperature at which a mass change of 50 mass% is observed in thermogravimetric differential thermal analysis (TG-DTA) is 300°C or more.

According to such a configuration, the adhesive is even more excellent in heat resistance for a long period after curing.

(4)
The adhesive according to any one of the items (1) to (3), in which the polyurethane resin (A) has a carboxyl group, and has an acid value of 5 mg KOH/g or more and 30 mg KOH/g or less.

According to such a configuration, the adhesive is even more excellent in close contact to a substrate before curing, and even more excellent in adhesion to the substrate after curing. Also, the adhesive is even more excellent in heat resistance for a long period after curing.

(5)
The adhesive according to any one of the items (1) to (4), in which the polyurethane resin (A) has a carbonate diol as a structural unit.

According to such a configuration, the adhesive is even more excellent in close contact to a substrate before curing, and even more excellent in adhesion to the substrate after curing. Also, the adhesive is even more excellent in heat resistance for a long period after curing.

(6)
The adhesive according to the item (1),
in which the polyurethane resin (A) has a structural unit derived from a polyol (a1) with a skeleton having 8 or more carbon atoms, and the adhesive is used as a hot-melt adhesive containing a crosslinked product of an adhesive composition containing a crosslinking agent.

According to such a configuration, the adhesive is able to be thermally press-bonded and being excellent in heat resistance, acid resistance and alcohol resistance.

(7)
The adhesive according to any one of the items (1) to (6), in which the polyurethane resin (A) contains a hydroxyl group-containing polyurethane resin having a hydroxyl group at a terminal, and the hydroxyl group-containing polyurethane resin has a hydroxyl value of 0.1 mg KOH/g or more and 20 mg KOH/g or less.

According to such a configuration, the adhesive is even more excellent in close contact to a substrate before curing, and even more excellent in adhesion to the substrate after curing. Also, the adhesive is even more excellent in heat resistance for a long period after curing. Further, in the case where the polyurethane resin (A) has a structural unit derived from a polyol (a1) with a skeleton having 8 or more carbon atoms, the adhesive is even more excellent in heat resistance, acid resistance and alcohol resistance.

(8)
The adhesive according to any one of the items (1) to (7), in which the polyurethane resin (A) has an aromatic diisocyanate as a structural unit.

According to such a configuration, the adhesive is even more excellent in close contact to a substrate before curing, and even more excellent in adhesion to the substrate after curing. Also, the adhesive is even more excellent in heat resistance for a long period after curing. Further, in the case where the polyurethane resin (A) has a structural unit derived from a polyol (a1) with a skeleton having 8 or more carbon atoms, the adhesive is even more excellent in heat resistance, acid resistance and alcohol resistance.

(9)
The adhesive according to any one of the items (1) to (8), in which the epoxy resin (B) is contained in an amount of 10 parts by mass or more and 100 parts by mass or less based on 100 parts by mass of the polyurethane resin (A).

According to such a configuration, the adhesive is even more excellent in close contact to a substrate before curing, and even more excellent in adhesion to the substrate after curing. Also, the adhesive is even more excellent in heat resistance for a long period after curing. Further, in the case where the polyurethane resin (A) has a structural unit derived from a polyol (a1) with a skeleton having 8 or more carbon atoms, the adhesive is even more excellent in heat resistance, acid resistance and alcohol resistance.

(10)
The adhesive according to any one of the items (1) to (9), in which the polyurethane resin (A) has a mass average molecular weight (Mw) of 1000 or more and 100000 or less.

According to such a configuration, the adhesive is even more excellent in close contact to a substrate before curing, and even more excellent in adhesion to the substrate after curing. Also, the adhesive is even more excellent in heat resistance for a long period after curing. Further, in the case where the polyurethane resin (A) has a structural unit derived from a polyol (a1) with a skeleton having 8 or more carbon atoms, the adhesive is even more excellent in heat resistance, acid resistance and alcohol resistance.

(11)
The adhesive according to any one of the items (1) to (10), in which the isocyanate crosslinking agent (C) is contained in an amount of 2 parts by mass or more and 50 parts by mass or less based on 100 parts by mass of the polyurethane resin (A) and the epoxy resin (B).

According to such a configuration, the adhesive is even more excellent in close contact to a substrate before curing, and even more excellent in adhesion to the substrate after curing. Also, the adhesive is even more excellent in heat resistance for a long period after curing. Further, in the case where the polyurethane resin (A) has a structural unit derived from a polyol (a1) with a skeleton having 8 or more carbon atoms, the adhesive is even more excellent in heat resistance, acid resistance and alcohol resistance.

(12)
The adhesive according to any one of the items (1) to (5) or any one of the items (7) to (11) which depend from any one of the items (1) to (5), in which the adhesive is used for bonding one resin film selected from the group consisting of a polyethylene terephthalate film, a polyethylene naphthalate film and a polybutylene terephthalate film, to an aramid paper.

(13)
The adhesive according to the item (6) or any one of the items (7) to (11) which depend from the item (6), in which the adhesive is used for bonding a member at least a surface of which is made of resin, and the resin is at least one selected from the group consisting of a polyethylene terephthalate resin, a polyethylene naphthalate resin, and a polybutylene terephthalate resin.

(14)
The adhesive according to the item (6) or any one of the items (7) to (11) which depend from the item (6), in which the adhesive is used for bonding a first member and a second member, at least a surface to be bonded of each of the first member and the second member is made of resin, the resin in the first member is at least one selected from the group consisting of a polyethylene terephthalate resin, a polyethylene naphthalate resin, and a polybutylene naphthalate resin, and the resin in the second member is a perfluorocarbonsulfonic acid resin.

The adhesive according to the present invention is not limited to the embodiments described above. Further, the adhesive according to the present invention is not limited by the effects described above. Various modifications can be made to the adhesive according to the present invention without departing from the gist of the present invention.

### EXAMPLES

The present invention will be specifically described below based on Examples, though the present invention is not limited to these examples. "Parts" and "%" in Examples, Reference Examples, and Comparative Examples are based on mass unless otherwise specified.

First, with reference to Examples 1A to 13A, Examples 1B to 3B, Comparative Examples 1A to 4A, Comparative Example 1B, and Reference Example 1, it is described that the adhesive of the present invention is excellent in close contact to a substrate before curing, and excellent in adhesion to the substrate and heat resistance after curing.

### <Synthesis Example of polyurethane resin (A)>

### <Synthesis Example of polyurethane resin: A1a>

A reaction vessel equipped with a stirrer, a reflux condenser, a thermometer, a nitrogen blower, and a manhole was provided. While purging the inside with nitrogen, into the reaction vessel were charged 200.0 g of polyhexamethylene carbonate diol having a hydroxyl group at both terminals (Duranol: T6002, manufactured by Asahi Kasei Chemicals Corporation, number average molecular weight according to the quantification method for terminal functional groups: 2000), and 10.0 g of 1,3-butylene glycol. Next, 87.1 g of methyl ethyl ketone (MEK) was charged thereinto as a solvent, and the inside of the system was stirred. After homogenization of the inside of the system, 51.2 g of 4,4'-diphenylmethane diisocyanate (MDI) was charged thereinto at 50°C, and a reaction was caused at 80°C to obtain a reaction liquid. The viscosity of the reaction solution was adjusted by diluting the reaction solution with methyl ethyl ketone (MEK) as solvent, and the reaction was allowed to proceed until the absorption at 2270 cm⁻¹ due to free isocyanate groups measured by infrared absorption spectroscopy disappeared. Thereby, a resin solution AA1a containing the polyurethane resin A1a was obtained. The resulting resin solution AA1a had a solid content of 30%, and the polyurethane resin A1a had a hydroxyl value of 2.7 mg KOH/g. The mass average molecular weight of the polyurethane resin A1a measured by GPC was 69000.

### <Synthesis Example of polyurethane resin: A2a>

A reaction vessel equipped with a stirrer, a reflux condenser, a thermometer, a nitrogen blower, and a manhole was provided. While purging the inside with nitrogen, into the reaction vessel were charged 200.0 g of polyhexamethylene carbonate diol having a hydroxyl group at both terminals (Duranol: T6002, manufactured by Asahi Kasei Chemicals Corporation, number average molecular weight according to the quantification method for terminal functional groups: 2000), 10.0 g of 1,3-butylene glycol, and 14.4 g of dimethylolpropanoic acid. Next, 100.6 g of methyl ethyl ketone (MEK) was charged thereinto as a solvent, and the inside of the system was stirred. After homogenization of the inside of the system, 77.3 g of 4,4'-diphenylmethane diisocyanate (MDI) was charged thereinto at 50°C, and a reaction was caused at 80°C to obtain a reaction liquid. The viscosity of the reaction solution was adjusted by diluting the reaction solution with methyl ethyl ketone (MEK) as solvent, and the reaction was allowed to proceed until the absorption at 2270 cm⁻¹ due to free isocyanate groups measured by infrared absorption spectroscopy disappeared. Thereby, a resin solution AA2a containing the polyurethane resin A2a was obtained. The resulting resin solution AA2a had a solid content of 30%, and the polyurethane resin A2a had a hydroxyl value of 3.6 mg KOH/g and an acid value of 20.0 mg KOH/g. The mass average molecular weight of the polyurethane resin A2a measured by GPC was 92000.

### <Synthesis Example of polyurethane resin: A3a>

A reaction vessel equipped with a stirrer, a reflux condenser, a thermometer, a nitrogen blower, and a manhole was provided. While purging the inside with nitrogen, into the reaction vessel were charged 200.0 g of polyhexamethylene carbonate diol having a hydroxyl group at both terminals (Duranol: T6002, manufactured by Asahi Kasei Chemicals Corporation, number average molecular weight according to the quantification method for terminal functional groups: 2000), and 10.0 g of 1,3-butylene glycol. Next, 85.8 g of methyl ethyl ketone (MEK) was charged thereinto as a solvent, and the inside of the system was stirred. After homogenization of the inside of the system, 47.5 g of 4,4'-diphenylmethane diisocyanate (MDI) was charged thereinto at 50°C, and a reaction was caused at 80°C to obtain a reaction liquid. The viscosity of the reaction solution was adjusted by diluting the reaction solution with methyl ethyl ketone (MEK) as solvent, and the reaction was allowed to proceed until the absorption at 2270 cm⁻¹ due to free isocyanate groups measured by infrared absorption spectroscopy disappeared. Thereby, a resin solution AA3a containing the polyurethane resin A3a was obtained. The resulting resin solution AA3a had a solid content of 30%, and the polyurethane resin A3a had a hydroxyl value of 9.2 mg KOH/g. The mass average molecular weight of the polyurethane resin A3a measured by GPC was 24000.

### <Example of dissolution of epoxy resin (B)>

### <Example of dissolution of epoxy resin: B1>

A reaction vessel equipped with a stirrer, a reflux condenser, a thermometer, a nitrogen blower and a manhole was provided. While purging the inside with nitrogen, into the reaction vessel was charged 400.0 g of bisphenol A type epoxy resin (epoxy equivalent: 450 g/eq, jER1001: manufactured by Mitsubishi Chemical Corporation, hereinafter referred to as epoxy resin B1), and then 600.0 g of methyl ethyl ketone (MEK) as solvent was charged thereinto while stirring. The inside of the system was heated to 60°C to completely dissolve the epoxy resin B1, so that a dissolved product BB1 of the epoxy resin B1 (hereinafter referred to as epoxy resin solution BB1) was obtained. The solid content of the obtained epoxy resin solution BB1 was 40%.

### <Example of dissolution of epoxy resin: B2>

A reaction vessel equipped with a stirrer, a reflux condenser, a thermometer, a nitrogen blower and a manhole was provided. While purging the inside with nitrogen, into the reaction vessel was charged 400.0 g of bisphenol A type epoxy resin (epoxy equivalent: 925 g/eq, jER1004: manufactured by Mitsubishi Chemical Corporation, hereinafter referred to as epoxy resin B2), and then 600.0 g of methyl ethyl ketone (MEK) as solvent was charged thereinto while stirring. The inside of the system was heated to 60°C to completely dissolve the epoxy resin B2, so that a dissolved product BB2 of the epoxy resin B2 (hereinafter referred to as epoxy resin solution BB2) was obtained. The solid content of the obtained epoxy resin solution BB2 was 40%.

### <Example of dissolution of epoxy resin: B3>

A reaction vessel equipped with a stirrer, a reflux condenser, a thermometer, a nitrogen blower and a manhole was provided. While purging the inside with nitrogen, into the reaction vessel was charged 400.0 g of bisphenol A type epoxy resin (epoxy equivalent: 1975 g/eq, jER1007: manufactured by Mitsubishi Chemical Corporation, hereinafter referred to as epoxy resin B3), and then 600.0 g of methyl ethyl ketone (MEK) as solvent was charged thereinto while stirring. The inside of the system was heated to 60°C to completely dissolve the epoxy resin B3, so that a dissolved product BB3 of the epoxy resin B3 (hereinafter referred to as epoxy resin solution BB3) was obtained. The solid content of the obtained epoxy resin solution BB3 was 40%.

### <Example of dissolution of epoxy resin: B4>

A reaction vessel equipped with a stirrer, a reflux condenser, a thermometer, a nitrogen blower and a manhole was provided. While purging the inside with nitrogen, into the reaction vessel was charged 400.0 g of bisphenol A type epoxy resin (epoxy equivalent: 8500 g/eq, jER1256: manufactured by Mitsubishi Chemical Corporation, hereinafter referred to as epoxy resin B4), and then 600.0 g of methyl ethyl ketone (MEK) as solvent was charged thereinto while stirring. The inside of the system was heated to 60°C to completely dissolve the epoxy resin B4, so that a dissolved product BB4 of the epoxy resin B4 (hereinafter referred to as epoxy resin solution BB4) was obtained. The solid content of the obtained epoxy resin solution BB4 was 40%.

### <Example of dissolution of epoxy resin: B5>

A reaction vessel equipped with a stirrer, a reflux condenser, a thermometer, a nitrogen blower and a manhole was provided. While purging the inside with nitrogen, into the reaction vessel was charged 800.0 g of bisphenol A novolac type epoxy resin (trifunctional or more) (epoxy equivalent: 200 g/eq, jER157S70: manufactured by Mitsubishi Chemical Corporation, hereinafter referred to as epoxy resin B5), and then 200.0 g of methyl ethyl ketone (MEK) as solvent was charged thereinto while stirring. The inside of the system was heated to 60°C to completely dissolve the epoxy resin B5, so that a dissolved product BB5 of the epoxy resin B5 (hereinafter referred to as epoxy resin solution BB5) was obtained. The solid content of the obtained epoxy resin solution BB5 was 80%.

### <Preparation of adhesive>

### [Adhesive of each Example]

The materials shown in the following Table 1 with the compounding ratios as shown in the following Table 1 were used, so that an adhesive according to each Example was obtained.

As epoxy resin solutions containing the polyurethane resin (A), the resin solutions AA1a to AA3a shown in the Synthesis Examples A1a to A3a were used.

As epoxy resin solutions containing the epoxy resin (B), the epoxy resin solutions BB1 to BB5 shown in the Examples of dissolution of epoxy resin B 1 to B5 were used.

As the isocyanate crosslinking agent (C), isocyanurate form of HDI (C1) (D-170N: manufactured by Mitsui Chemicals, Inc.), TMP adduct form of TDI (C2) (D-101E: manufactured by Mitsui Chemicals, Inc.) or isocyanurate form of TDI (C3) (D-204: manufactured by Mitsui Chemicals, Inc.) was used.

**[Table 1]**

| Compounded product | | Hydroxyl value | Acid value | Epoxy equivalent | Compounding ratio (solid content) (part by mass) | | | | | | | | |
|---|---|---|---|---|---|---|---|---|---|---|---|---|---|
| | | | | | Example | | | | | | | | |
| | | (mgKOH/g) | (mgHOH/g) | (g/eq) | 1A | 2A | 3A | 4A | 5A | 6A | 7A | 8A | 9A |
| Polyurethane resin | A1a | 2.7 | 0 | - | 100 | 100 | 100 | | | 100 | 100 | 100 | 100 |
| | A2a | 3.6 | 20 | - | | | | 100 | | | | | |
| | A3a | 9.2 | 0 | - | | | | | 100 | | | | |
| Epoxy resin | B1 | 123 | - | 450 | 45 | 45 | 45 | 45 | 45 | | | 45 | 45 |
| | B2 | 161 | - | 925 | | | | | | 45 | | | |
| | B3 | 180 | - | 1975 | | | | | | | 45 | | |
| | B4 | 193 | - | 8500 | | | | | | | | | |
| | B5 | 0 | - | 200 | | | | | | | | | |
| Isocyanate crosslinking agent | C1 | - | - | - | 15 | 15 | 15 | 15 | 15 | 15 | 15 | | |
| | C2 | - | - | - | | | | | | | | 15 | |
| | C3 | - | - | - | | | | | | | | | 15 |
| Final solid content (%) | | | | | 30 | 30 | 30 | 30 | 30 | 30 | 30 | 30 | 30 |

| Compounded product | | Hydroxyl value | Acid value | Epoxy equivalent | Compounding ratio (solid content) (part by mass) | | | | | | | | |
|---|---|---|---|---|---|---|---|---|---|---|---|---|---|
| | | | | | Example | | | | Comparative Example | | | | Reference Example |
| | | (mgKOH/g) | (mgHOH/g) | (g/eq) | 10A | 11A | 12A | 13A | 1A | 2A | 3A | 4A | 1 |
| Polyurethane resin | A1a | 2.7 | 0 | - | 100 | 100 | 100 | 100 | 100 | 100 | 100 | | |
| | A2a | 3.6 | 20 | - | | | | | | | | 100 | 100 |
| | A3a | 9.2 | 0 | - | | | | | | | | | |
| Epoxy resin | B1 | 123 | - | 450 | 10 | 100 | 45 | 45 | | | | | |
| | B2 | 161 | - | 925 | | | | | | | | | |
| | B3 | 180 | - | 1975 | | | | | | | | | |
| | B4 | 193 | - | 8500 | | | | | | 45 | | 35 | 35 |
| | B5 | 0 | - | 200 | | | | | | | 45 | 18 | 18 |
| Isocyanate crosslinking agent | C1 | - | - | - | 15 | 15 | 3 | 72 | 15 | 15 | 15 | | |
| | C2 | - | - | - | | | | | | | | | |
| | C3 | - | - | - | | | | | | | | | |
| Final solid content (%) | | | | | 30 | 30 | 30 | 30 | 30 | 30 | 30 | 30 | 30 |

### [Application of adhesive to film]

The adhesive of each Example was diluted to a solid content of 25 mass% with methyl ethyl ketone (MEK). In Example 1A, a diluted adhesive was applied to the entire surface of one side of a PET film (length: 210 mm, width: 150 mm, thickness: 100 µm, Lumirror: manufactured by PANAC Corporation), and then dried at 100°C for 1 minute, so that a PET film with an adhesive layer was prepared. The application was performed such that the adhesive layer had a thickness of 12 µm after drying. In Example 2A, application was performed in the same manner as in Example 1A, except that the PET film was replaced with a PEN film (length: 210 mm, width: 150 mm, thickness: 100 µm, Teonex: manufactured by Toyobo Film Solutions Ltd.). Further, in Example 3A, application was performed in the same manner as in Example 1A, except that the PET film was replaced with a PBT film (length: 210 mm, width: 150 mm, thickness: 25 µm, BOBLET: manufactured by KOHJIN Film & Chemicals Co., Ltd.). Further, in Examples 4A to 13A, Comparative Examples 1A to 4A, and Reference Example 1, application was performed in the same manner as in Example 1A, except that the PET film was replaced with a PEN film as in Example 2A.

### [Initial close contact]

The film with an adhesive layer of each Example was subjected to evaluation of the initial close contact. Specifically, the evaluation was performed according to the following procedures.
(1) A film with an adhesive layer of each Example was overlaid on an aramid paper (having the same shape as the film with an adhesive layer), such that the exposed surface of the adhesive layer of the film with an adhesive layer of each Example came into contact with one surface of the aramid paper.
(2) Using a laminator adjusted to 80°C, the film with an adhesive layer of each Example and the aramid paper were laminated to prepare an insulating sheet of each Example.
(3) At room temperature (23±2°C), the aramid paper was peeled off from the film with an adhesive layer of each Example by pulling by hand, so that the initial close contact was evaluated according to the following criteria.
   · Excellent: Material destruction occurs in the aramid paper. That is, with a portion of the aramid paper on one side adhered to the whole area of the surface in contact with the adhesive layer, the rest of the aramid paper is peeled off.
   · Good: With a portion of the aramid paper on one side adhered to a portion of the surface in contact with the adhesive layer, the rest of the aramid paper is peeled off.
   · Unacceptable: The aramid paper is easily peeled off, with no residual aramid paper observed on the surface in contact with the adhesive layer.

### [Processability]

An insulating sheet of each Example was prepared according to the procedures (1) and (2) for the initial close contact. Then, the processability was evaluated according to the following criteria.
· Excellent: In visual observation of an insulating sheet, no distortion, no wrinkles, and no floats are observed.
· Good: In visual observation of an insulating sheet, no wrinkles and no floats are observed, though distortion is observed.
· Unacceptable: In visual observation of an insulating sheet, distortion and wrinkles are observed, and floats are also observed.

### [Peelability]

The peelability of the film with an adhesive layer of each Example was evaluated, using an Autograph (Autograph AGS-J500N, manufactured by Shimadzu Corporation). Specifically, the evaluation was performed according to the following procedures.
(1) A film with an adhesive layer of each Example was overlaid on aramid paper (having the same shape as the film with an adhesive layer), such that the exposed surface of the adhesive layer of the film with an adhesive layer of each example came into contact with one surface of the aramid paper.
(2) Using a laminator adjusted to 80°C, the film with an adhesive layer of each Example and the aramid paper were laminated to prepare an insulating sheet of each Example.
(3) The insulating sheet of each Example was left in an oven at a predetermined temperature for a predetermined time, so that a curing reaction proceeded. The insulating sheet of each Example or each Comparative Example was left in an oven at 50°C for 72 hours, so that a curing reaction proceeded. On the other hand, the insulating sheet of Reference Example 1 was left in an oven at 100°C for 12 hours, so that a curing reaction proceeded.
(4) A test piece having sizes of 25 mm in width and 80 mm in length was cut out from the insulating sheet, and subjected to a peeling test using an Autograph to evaluate peelability according to the following criteria. In the peeling test, a T-type peeling test with a tensile rate of 100 mm/min was performed.
   · Excellent: Material destruction occurs in the aramid paper.
   · Good: No material destruction occurs in the aramid paper, and the measured value of the peeling strength is 1 N or more.
   · Unacceptable: The measured value of the peeling strength is less than 1 N.

### [Evaluation of heat resistance at 255°C]

The film with an adhesive layer of each Example was subjected to the evaluation of heat resistance at 255°C. Specifically, it was evaluated according to the following procedures.
(1) A film with an adhesive layer of each Example was overlaid on aramid paper (having the same shape as the film with an adhesive layer), such that the exposed surface of the adhesive layer of the film with an adhesive layer of each example came into contact with one surface of the aramid paper.
(2) Using a laminator adjusted to 80°C, the film with an adhesive layer of each Example and the aramid paper were laminated to prepare an insulating sheet having a three-layer structure of each Example.
(3) An adhesive diluted to a solid content of 25% with methyl ethyl ketone (MEK) was applied to the entire surface of the opposite side of an adhesive layer (first adhesive layer) of the insulating sheet having a three-layer structure of each Example, and then dried at 100°C for 1 minute, so that an insulating sheet having a four-layer structure with a second adhesive layer formed on the insulating sheet with the three-layer structure of each Example was prepared. The application was performed such that the adhesive layer after drying had a thickness of 12 µm.
(4) An insulating sheet having a four-layer structure of each Example and aramid paper (having the same shape as the film with an adhesive layer) were laminated, such that the exposed surface of the second adhesive layer of the insulating sheet having a four-layer structure of each Example came into contact with one surface of the aramid paper.
(5) Using a laminator adjusted to 80°C, the insulating sheet having a four-layer structure of each Example and the aramid paper were laminated, so that an insulating sheet having five-layer structure of each Example was prepared. That is, an insulating sheet including aramid paper/second adhesive layer/film/first adhesive layer/aramid paper disposed in this order was prepared.
(6) The insulating sheet having a five-layer structure of each Example was left in an oven at a predetermined temperature for a predetermined time, so that a curing reaction proceeded in the second adhesive layer. The insulating sheet of each Example or each Comparative Example was left in an oven at 50°C for 72 hours, so that a curing reaction proceeded. On the other hand, the insulating sheet of Reference Example 1 was left in an oven at 100°C for 12 hours, so that a curing reaction proceeded.
(7) A specimen having plane sizes of 5 cm by 5 cm was cut out from the insulating sheet having a five-layer structure of each Example, and each specimen was left in an oven at 255°C for 24 hours. Then, the heat resistance of each specimen was evaluated according to the following criteria.
   · Excellent: After the treatment at 255°C, no deformation and no peeling are observed in the insulating sheet.
   · Good: After treatment at 255°C, no peeling and no excessive swelling are observed in the insulating sheet, though deformation is observed.
   · Unacceptable: After treatment at 255°C, peeling is observed in the insulating sheet and excessive swelling is also observed.

### [Evaluation of heat resistance in thermogravimetric differential thermal analysis

### (TG-DTA) (Part 1)]

The adhesive of each Example was subjected to evaluation of the heat resistance through thermogravimetric differential thermal analysis (TG-DTA). Specifically, the evaluation was performed according to the following procedures.
(1) An adhesive of each Example diluted to a solid content of 30% with methyl ethyl ketone (MEK) was applied to the entire surface of one side of a release paper, and then dried at 100°C for 1 minute, so that a release paper having the adhesive layer of each Example was prepared. The application was performed such that the adhesive layer after drying had a thickness of 12 µm.
(2) The peeling sheet having an adhesive layer of each Example was left in an oven at a predetermined temperature for a predetermined time, so that a curing reaction proceeded in the adhesive layer. The release paper having an adhesive layer of each Example or each Comparative Example was left in an oven at 50°C for 72 hours, so that a curing reaction proceeded. On the other hand, the release paper having an adhesive layer of Reference Example 1 was left in an oven at 100°C for 12 hours, so that a curing reaction proceeded. After proceeding of the curing reaction, the release paper was peeled off, separated from the adhesive layer of each Example or each Comparative Example.
(3) Using a thermogravimetric differential thermal analyzer (TG8120, manufactured by Rigaku Corporation), the temperature was raised from room temperature (23±2°C) at a rate of 5°C/min in an atmosphere of 100 mlL/min of air, so that a TG-DTA curve for the adhesive layer of each Example peeled from the release paper was obtained. Then, based on the temperature at which the mass decreased by 5% (5% mass loss temperature) and the temperature at which the mass decreased by 50% (50% mass loss temperature), the heat resistance was evaluated. The 5% mass loss temperature in the TG-DTA curve indicates short-term heat resistance, and the 50% mass loss temperature in the TG-DTA curve indicates long-term heat resistance. The heat resistance in thermogravimetric differential thermal analysis (TG-DTA) was evaluated according to the following criteria.
   · Excellent: 5% mass loss temperature is 280°C or more and 50% mass loss temperature is 350°C or more.
   · Good: 5% mass loss temperature is 200°C or more and less than 280°C, and 50% mass loss temperature is 300°C or more and less than 350°C.
   · Unacceptable: 5% mass loss temperature is less than 200°C and 50% mass loss temperature is less than 300°C.

**[Table 2]**

| | Example | | | | | | | | |
|---|---|---|---|---|---|---|---|---|---|
| | 1A | 2A | 3A | 4A | 5A | 6A | 7A | 8A | 9A |
| Initial close contact | Excellent | Excellent | Excellent | Excellent | Excellent | Excellent | Excellent | Excellent | Excellent |
| Processability | Excellent | Excellent | Excellent | Excellent | Excellent | Excellent | Excellent | Excellent | Excellent |
| Peeling strength | Excellent | Excellent | Excellent | Excellent | Excellent | Excellent | Excellent | Excellent | Excellent |
| Heat resistance (255°C) | Excellent | Excellent | Excellent | Excellent | Excellent | Excellent | Excellent | Excellent | Excellent |
| Heat resistance (TG-DTA) | Excellent | Excellent | Excellent | Excellent | Excellent | Excellent | Excellent | Excellent | Excellent |

| | Example | | | | Comparative Example | | | | Reference Example |
|---|---|---|---|---|---|---|---|---|---|
| | 10A | 11A | 12A | 13A | 1A | 2A | 3A | 4A | 1 |
| Initial close contact | Excellent | Excellent | Excellent | Excellent | Excellent | Unacceptable | Excellent | Excellent | Excellent |
| Processability | Excellent | Excellent | Excellent | Excellent | Excellent | Unacceptable | Excellent | Excellent | Excellent |
| Peeling strength | Excellent | Excellent | Excellent | Excellent | Excellent | Unacceptable | Good | Unacceptable | Excellent |
| Heat resistance (255°C) | Excellent | Excellent | Excellent | Excellent | Unacceptable | Unacceptable | Unacceptable | Unacceptable | Excellent |
| Heat resistance (TG-DTA) | Excellent | Excellent | Excellent | Excellent | Unacceptable | Excellent | Unacceptable | Unacceptable | Excellent |

From the results shown in Table 2, it is understood that the adhesive of the present invention has excellent close contact with a substrate before curing, and has excellent heat resistance for a long period and excellent adhesion to a substrate after curing.

### [Evaluation of heat resistance in thermogravimetric differential thermal analysis (TG-DTA) (Part 2)]

The insulating sheets having a five-layer structure prepared as follows (Examples 1B to 3B and Comparative Example 1B) were subjected to evaluation of the heat resistance (heat resistance of adhesive in insulating sheet) through thermogravimetric differential thermal analysis (TG-DTA). Evaluation of heat resistance through thermogravimetric differential thermal analysis (TG-DTA) was performed according to item (3) of the evaluation procedure described above. The heat resistance in Examples 1B to 3B and Comparative Example 1B was evaluated through thermogravimetric differential thermal analysis (TG-DTA) according to the following criteria.
· Excellent: the temperature at which the mass decreased by 10% (10% mass loss temperature) is 330°C or more and 50% mass loss temperature is 350°C or more.
· Unacceptable: 10% mass loss temperature is less than 330°C and 50% mass loss temperature is less than 350°C.

The results are shown in the following Table 3.

### (Example 1B)

An insulating paper, an adhesive layer, and a substrate film were laminated in the following order into five layers, so that an insulating sheet of Example 1B (thickness of insulating sheet: 139 µm) was obtained.
Aramid paper (insulating paper, thickness: 50 µm)
Adhesive layer (thickness: 7 µm)
Polyethylene terephthalate film (substrate film, thickness: 25 µm)
Adhesive layer (thickness: 7 µm)
Aramid paper (insulating paper, thickness: 50 µm)

In the insulating sheet of Example 1B, the adhesive layer included an adhesive containing a polyurethane resin (A), an epoxy resin (B), and an isocyanate crosslinking agent (C). In the insulating sheet of Example 1B, the adhesive was prepared by mixing a resin solution containing the polyurethane resin (A), an epoxy resin solution containing the epoxy resin (B), and an aliphatic isocyanate as the isocyanate crosslinking agent (C). As the resin solution containing the polyurethane resin (A), the resin solution AA2a shown in Synthesis Example A2a was used. As the epoxy resin solution containing the epoxy resin (B), the epoxy resin solution BB1 shown in the dissolution example B1 of the epoxy resin was used. As the aliphatic isocyanate, an isocyanurate form of hexamethylene diisocyanate (HDI) was used. The resin solution AA2a and the epoxy resin solution BB1 were compounded, such that the epoxy resin content (solid content) was 45 parts by mass based on 100 parts by mass of the polyurethane resin (solid content). Further, 10 parts by mass of the aliphatic isocyanate was compounded relative to a total of 100 parts by mass of the polyurethane resin (solid content) and the epoxy resin (solid content). The insulating sheet of Example 1B was subjected to aging treatment at 40°C for 5 days (120 hours), so that a curing reaction (crosslinking reaction) proceeded in the adhesive layer.

### (Example 2B)

An insulating sheet of Example 2B (five-layer structure, thickness: 139 µm) was prepared in the same manner as in Example 1B, except that the isocyanate crosslinking agent (C) was replaced with an aromatic isocyanate. As the aromatic isocyanate, an isocyanurate form of tolylene diisocyanate (TDI) was used. In Example 2B also, 10 parts by mass of the aromatic isocyanate was compounded relative to a total of 100 parts by mass of the polyurethane resin (solid content) and the epoxy resin (solid content). The insulating sheet of Example 2B was also subjected to aging treatment at 40°C for 5 days (120 hours), so that a curing reaction (crosslinking reaction) proceeded in the adhesive layer.

### (Example 3B)

The insulating sheet of Example 3B (5-layer structure, thickness: 139 µm) was prepared in the same manner as in Example 1B, except that the isocyanate crosslinking agent (C) was replaced with a mixture of an aliphatic isocyanate and an aromatic isocyanate (hereinafter, referred to as isocyanate mixture). As the isocyanate mixture, a mixture of isocyanurate form of HDI and isocyanurate form of TDI, which is a mixture of aliphatic isocyanate and aromatic isocyanate, was used. In Example 3B also, 10 parts by mass of the isocyanate mixture was compounded relative to a total of 100 parts by mass of the polyurethane resin (solid content) and the epoxy resin (solid content). The insulating sheet of Example 3B was also subjected to aging treatment at 40°C for 5 days (120 hours), so that a curing reaction (crosslinking reaction) proceeded in the adhesive layer.

### (Comparative Example 1B)

The insulating sheet of Comparative Example 1B (5-layer structure, thickness: 139 µm) was prepared in the same manner as in Example 1B, except that the isocyanate crosslinking agent (C) was replaced with an aromatic amine crosslinking agent (4,4'-diaminodiphenylsulfone (DDS)). In Comparative Example 1B also, 10 parts by mass of the aromatic amine crosslinking agent was compounded relative to a total of 100 parts by mass of the polyurethane resin (solid content) and the epoxy resin (solid content). The insulating sheet of Comparative Example 1B was also subjected to aging treatment at 40°C for 5 days (120 hours), so that a curing reaction (crosslinking reaction) proceeded in the adhesive layer.

**Table 3**

| | Aging condition | TG-DTA | | Heat resistance |
|---|---|---|---|---|
| | | 10% Mass loss temperature [°C] | 50% Mass loss temperature [°C] | |
| Example 1B | 40°C×5days | 330 | 389 | Excellent |
| Example2B | 40°C×5days | 330 | 376 | Excellent |
| Example3B | 40°C×5days | 339 | 386 | Excellent |
| Comparative Example1B | 40°C×5days | 315 | 359 | Unacceptable |

From the results, it can be understood that the adhesive of the present invention has excellent heat resistance for a long period even when used as an insulating sheet.

Next, with reference to Examples 1C to 14C and Comparative Examples 1C to 5C, it is described that the adhesive of the present invention has excellent close contact to a substrate before curing, and has excellent adhesion to the substrate, and excellent heat resistance, acid resistance, and alcohol resistance, after curing.

### [Synthesis Example of polyurethane resin (A)]

### <Synthesis Example of polyurethane resin: A1b>

A reaction vessel equipped with a stirrer, a reflux condenser, a thermometer, a nitrogen blower, and a manhole was provided. While purging the inside with nitrogen, into the reaction vessel were charged 300.0 g of polyhexamethylene carbonate diol having a hydroxyl group at both terminals (Duranol: T6002, manufactured by Asahi Kasei Chemicals Corporation), 200.0 g of polycyclohexane dimethanol/hexanediol copolymer carbonate diol (trade name "ETERNACOLLUM-90 (3/1)", manufactured by UBE Corporation, hydroxyl value=112.2 mg KOH/g, molar ratio of cyclohexane dimethanol/hexanediol=3/1), and 10.0 g of 1,3-butylene glycol. Next, 207.3 g of methyl ethyl ketone (MEK) was charged thereinto as a solvent, and the inside of the system was stirred. After homogenization of the inside of the system, 111.8 g of 4,4'-diphenylmethane diisocyanate (MDI) was charged thereinto at 50°C, and a reaction was caused at 80°C to obtain a reaction liquid. The viscosity of the reaction solution was adjusted by diluting the reaction solution with methyl ethyl ketone (MEK) as solvent, and the reaction was allowed to proceed until the absorption at 2270 cm⁻¹ due to free isocyanate groups measured by infrared absorption spectroscopy disappeared. Thereby, a resin solution AA1b containing a polyurethane resin A1b was obtained. The resulting resin solution AA1b had a solid content of 30 mass%, and the polyurethane resin A1b had a hydroxyl value of 2.5 mg KOH/g, and 29.7 mass% of a polyol (a1) with a skeleton having 8 or more carbon atoms. The mass average molecular weight of the polyurethane resin A1b measured by GPC was 72000.

### <Synthesis Example of polyurethane resin: A2b>

A reaction vessel equipped with a stirrer, a reflux condenser, a thermometer, a nitrogen blower, and a manhole was provided. While purging the inside with nitrogen, into the reaction vessel were charged 300.0 g of polyhexamethylene carbonate diol having a hydroxyl group at both terminals (Duranol: T6002, manufactured by Asahi Kasei Chemicals Corporation), 200.0 g of polycyclohexane dimethanol/hexanediol copolymer carbonate diol (trade name "ETERNACOLLUM-90 (3/1)", manufactured by UBE Corporation, hydroxyl value=112.2 mg KOH/g), 10.0 g of 1,3-butylene glycol, and 16 g of dimethylol propanoic acid. Next, 222.3 g of methyl ethyl ketone (MEK) was charged thereinto as a solvent, and the inside of the system was stirred. After homogenization of the inside of the system, 140.8 g of 4,4'-diphenylmethane diisocyanate (MDI) was charged thereinto at 50°C, and a reaction was caused at 80°C to obtain a reaction liquid. The viscosity of the reaction solution was adjusted by diluting the reaction solution with methyl ethyl ketone (MEK) as solvent, and the reaction was allowed to proceed until the absorption at 2270 cm⁻¹ due to free isocyanate groups measured by infrared absorption spectroscopy disappeared. Thereby, a resin solution AA2b containing a polyurethane resin A2b was obtained. The resulting resin solution AA2b had a solid content of 30 mass%, and the polyurethane resin A2b had a hydroxyl value of 2.9 mg KOH/g, and an acid value of 10.0 mg KOH/g. The mass average molecular weight of the polyurethane resin A2 measured by GPC was 61000. The polyurethane resin A2b included 29.7 mass% of a polyol with a skeleton having 8 or more carbon atoms.

### <Synthesis Example of polyurethane resin: A3b>

A reaction vessel equipped with a stirrer, a reflux condenser, a thermometer, a nitrogen blower, and a manhole was provided. While purging the inside with nitrogen, into the reaction vessel were charged 300.0 g of polyhexamethylene carbonate diol having a hydroxyl group at both terminals (Duranol: T6002, manufactured by Asahi Kasei Chemicals Corporation), 200.0 g of polydecamethylene carbonate diol having a hydroxyl group at both terminals (hydroxyl value=56.1 mg KOH/g), and 10.0 g of 1,3-butylene glycol. Next, 199.2 g of methyl ethyl ketone (MEK) was charged thereinto as a solvent, and the inside of the system was stirred. After homogenization of the inside of the system, 87.6 g of 4,4'-diphenylmethane diisocyanate (MDI) was charged thereinto at 50°C, and a reaction was caused at 80°C to obtain a reaction liquid. The viscosity of the reaction solution was adjusted by diluting the reaction solution with methyl ethyl ketone (MEK) as solvent, and the reaction was allowed to proceed until the absorption at 2270 cm⁻¹ due to free isocyanate groups measured by infrared absorption spectroscopy disappeared. Thereby, a resin solution AA3b containing a polyurethane resin A3b was obtained. The resulting resin solution AA3b had a solid content of 30 mass%, and the polyurethane resin A3b had a hydroxyl value of 2.0 mg KOH/g, and 30.6 mass% of a polyol (a1) with a skeleton having 8 or more carbon atoms. The mass average molecular weight of the polyurethane resin A3b measured by GPC was 76000.

### <Synthesis Example of polyurethane resin: A4b>

A reaction vessel equipped with a stirrer, a reflux condenser, a thermometer, a nitrogen blower, and a manhole was provided. While purging the inside with nitrogen, into the reaction vessel were charged 300.0 g of polyhexamethylene carbonate diol having a hydroxyl group at both terminals (Duranol: T6002, manufactured by Asahi Kasei Chemicals Corporation), 200.0 g of dimer diol (trade name "Pripol 2033", manufactured by Croda Japan KK, OHv=207 mg KOH/g), and 10.0 g of 1,3-butylene glycol. Next, 220.9 g of methyl ethyl ketone (MEK) was charged thereinto as a solvent, and the inside of the system was stirred. After homogenization of the inside of the system, 152.8 g of 4,4'-diphenylmethane diisocyanate (MDI) was charged thereinto at 50°C, and a reaction was caused at 80°C to obtain a reaction liquid. The viscosity of the reaction solution was adjusted by diluting the reaction solution with methyl ethyl ketone (MEK) as solvent, and the reaction was allowed to proceed until the absorption at 2270 cm⁻¹ due to free isocyanate groups measured by infrared absorption spectroscopy disappeared. Thereby, a resin solution AA4b containing a polyurethane resin A4b was obtained. The resulting resin solution AA4b had a solid content of 30 mass%, and the polyurethane resin A4b had a hydroxyl value of 3.2 mg KOH/g, and 39.2 mass% of a polyol (a1) with a skeleton having 8 or more carbon atoms. The mass average molecular weight of the polyurethane resin A4b measured by GPC was 56000.

### <Synthesis Example of polyurethane resin: A5b>

A reaction vessel equipped with a stirrer, a reflux condenser, a thermometer, a nitrogen blower, and a manhole was provided. While purging the inside with nitrogen, into the reaction vessel were charged 300.0 g of polyhexamethylene carbonate diol having a hydroxyl group at both terminals (Duranol: T6002, manufactured by Asahi Kasei Chemicals Corporation), 200.0 g of hydrogenated polybutadiene polyol (trade name "GI-1000", manufactured by Nippon Soda Co., Ltd., OHv=66 mg KOH/g), and 10.0 g of 1,3-butylene glycol. Next, 200.6 g of methyl ethyl ketone (MEK) was charged thereinto as a solvent, and the inside of the system was stirred. After homogenization of the inside of the system, 91.8 g of 4,4'-diphenylmethane diisocyanate (MDI) was charged thereinto at 50°C, and a reaction was caused at 80°C to obtain a reaction liquid. The viscosity of the reaction solution was adjusted by diluting the reaction solution with methyl ethyl ketone (MEK) as solvent, and the reaction was allowed to proceed until the absorption at 2270 cm⁻¹ due to free isocyanate groups measured by infrared absorption spectroscopy disappeared. Thereby, a resin solution AA5b containing a polyurethane resin A5b was obtained. The resulting resin solution AA5b had a solid content of 30 mass%, and the polyurethane resin A5b had a hydroxyl value of 2.1 mg KOH/g, and 39.2 mass% of a polyol (a1) with a skeleton having 8 or more carbon atoms. The mass average molecular weight of the polyurethane resin A5b measured by GPC was 84000.

### <Synthesis Example of polyurethane resin: A6b>

A reaction vessel equipped with a stirrer, a reflux condenser, a thermometer, a nitrogen blower, and a manhole was provided. While purging the inside with nitrogen, into the reaction vessel were charged 200.0 g of polyhexamethylene carbonate diol having a hydroxyl group at both terminals (Duranol: T6002, manufactured by Asahi Kasei Chemicals Corporation, number average molecular weight according to the quantification method for terminal functional groups: 2000), and 10.0 g of 1,3-butylene glycol. Next, 87.1 g of methyl ethyl ketone (MEK) was charged thereinto as a solvent, and the inside of the system was stirred. After homogenization of the inside of the system, 51.2 g of 4,4'-diphenylmethane diisocyanate (MDI) was charged thereinto at 50°C, and a reaction was caused at 80°C to obtain a reaction liquid. The viscosity of the reaction solution was adjusted by diluting the reaction solution with methyl ethyl ketone (MEK) as solvent, and the reaction was allowed to proceed until the absorption at 2270 cm⁻¹ due to free isocyanate groups measured by infrared absorption spectroscopy disappeared. Thereby, a resin solution AA6b containing the polyurethane resin A6b was obtained. The resulting resin solution AA6b had a solid content of 30%, and the polyurethane resin A6b had a hydroxyl value of 2.7 mg KOH/g. The mass average molecular weight of the polyurethane resin A6b measured by GPC was 65000. The polyurethane resin A6b contains no polyol (a1) with a skeleton having 8 or more carbon atoms.

### <Synthesis Example of polyurethane resin: A7b>

A reaction vessel equipped with a stirrer, a reflux condenser, a thermometer, a nitrogen blower, and a manhole was provided. While purging the inside with nitrogen, into the reaction vessel were charged 300.0 g of polyhexamethylene carbonate diol having a hydroxyl group at both terminals (Duranol: T6002, manufactured by Asahi Kasei Chemicals Corporation), 20.0 g of polycyclohexane dimethanol/hexanediol copolymer carbonate diol (trade name "ETERNACOLLUM-90 (3/1)", manufactured by UBE Corporation, hydroxyl value=112.2 mg KOH/g, molar ratio of cyclohexane dimethanol/hexanediol=3/1), and 6.4 g of 1,3-butylene glycol. Next, 128.3 g of methyl ethyl ketone (MEK) was charged thereinto as a solvent, and the inside of the system was stirred. After homogenization of the inside of the system, 58.5 g of 4,4'-diphenylmethane diisocyanate (MDI) was charged thereinto at 50°C, and a reaction was caused at 80°C to obtain a reaction liquid. The viscosity of the reaction solution was adjusted by diluting the reaction solution with methyl ethyl ketone (MEK) as solvent, and the reaction was allowed to proceed until the absorption at 2270 cm⁻¹ due to free isocyanate groups measured by infrared absorption spectroscopy disappeared. Thereby, a resin solution AA7b containing a polyurethane resin A7b was obtained. The resulting resin solution AA7b had a solid content of 30 mass%, and the polyurethane resin A7b had a hydroxyl value of 2.1 mg KOH/g and 4.8 mass% of a polyol (a1) with a skeleton having 8 or more carbon atoms. The mass average molecular weight of the polyurethane resin A7b measured by GPC was 85000.

### <Synthesis Example of polyurethane resin: A8b>

A reaction vessel equipped with a stirrer, a reflux condenser, a thermometer, a nitrogen blower, and a manhole was provided. While purging the inside with nitrogen, into the reaction vessel were charged 300.0 g of polyhexamethylene carbonate diol having a hydroxyl group at both terminals (Duranol: T6002, manufactured by Asahi Kasei Chemicals Corporation), 1700 g of polycyclohexane dimethanol/hexanediol copolymer carbonate diol (trade name "ETERNACOLLUM-90 (3/1)", manufactured by UBE Corporation, hydroxyl value=112.2 mg KOH/g, molar ratio of cyclohexane dimethanol/hexanediol=3/1), and 40 g of 1,3-butylene glycol. Next, 865.5 g of methyl ethyl ketone (MEK) was charged thereinto as a solvent, and the inside of the system was stirred. After homogenization of the inside of the system, 556.4 g of 4,4'-diphenylmethane diisocyanate (MDI) was charged thereinto at 50°C, and a reaction was caused at 80°C to obtain a reaction liquid. The viscosity of the reaction solution was adjusted by diluting the reaction solution with methyl ethyl ketone (MEK) as solvent, and the reaction was allowed to proceed until the absorption at 2270 cm⁻¹ due to free isocyanate groups measured by infrared absorption spectroscopy disappeared. Thereby, a resin solution AA8b containing a polyurethane resin A8b was obtained. The resulting resin solution AA8b had a solid content of 30 mass%, and the polyurethane resin A8b had a hydroxyl value of 3.0 mg KOH/g and 65.0% of a polyol (a1) with a skeleton having 8 or more carbon atoms. The mass average molecular weight of the polyurethane resin A8b measured by GPC was 60000.

### [Example of dissolution of epoxy resin (B)]

In the same manner as described above, a dissolved product BB1 of epoxy resin B1 (epoxy resin solution BB1), a dissolved product BB2 of epoxy resin B2 (epoxy resin solution BB2), a dissolved product BB3 of epoxy resin B3 (epoxy resin solution BB3), a dissolved product BB4 of epoxy resin BB4 (epoxy resin solution BB4), and a dissolved product BB5 of epoxy resin BB5 (epoxy resin solution BB5) were obtained.

### [Preparation of adhesive]

An adhesive of each Example was obtained from the materials shown in the following Table 1 at a compounding ratio shown in the following Table 4.

As the resin solution containing the polyurethane resin (A), the resin solutions AA1b to AA8b shown in Synthesis Examples A1b to A8b were used.

As the epoxy resin solution containing the epoxy resin (B), the epoxy resin solutions BB1 to BB5 shown in the Examples B1 to B5 of the dissolved epoxy resin were used.

As the isocyanate crosslinking agent (C), a TMP adduct form of XDI (C4) (D-110N, manufactured by Mitsui Chemicals, Inc.), a TMP adduct form of TDI (C2) (D-101E, manufactured by Mitsui Chemicals, Inc.) and an isocyanurate form of HDI (C5) (D-170N, manufactured by Mitsui Chemicals, Inc.) were used.

**[Table 4]**

| | | Example | | | | | | | | | |
|---|---|---|---|---|---|---|---|---|---|---|---|
| Compounded product | | 1C | 2C | 3C | 4C | 5C | 6C | 7C | 8C | 9C | 10C |
| Polyurethane resin | A1b | 100 | 100 | 100 | 100 | 100 | 100 | 100 | 100 | | |
| | A2b | | | | | | | | | 100 | |
| | A3b | | | | | | | | | | 100 |
| | A4b | | | | | | | | | | |
| | A5b | | | | | | | | | | |
| | A6b | | | | | | | | | | |
| | A7b | | | | | | | | | | |
| | A8b | | | | | | | | | | |
| Epoxy resin | B1 | 25 | 25 | 25 | 70 | | | 25 | 25 | 25 | 25 |
| | B2 | | | | | 25 | | | | | |
| | B3 | | | | | | 25 | | | | |
| | B4 | | | | | | | | | | |
| | B5 | | | | | | | | | | |
| Isocyanate crosslinking agent | C4 | 13 | 13 | 13 | 17 | 13 | 13 | | | 13 | 13 |
| | C2 | | | | | | | 13 | | | |
| | C5 | | | | | | | | 13 | | |

| | | Example | | | | Comparative Example | | | | | |
|---|---|---|---|---|---|---|---|---|---|---|---|
| Compounded product | | 11C | 12C | 13C | 14C | 1C | 2C | 3C | 4C | 5C | |
| Polyurethane resin | A1b | | | | | | 100 | 100 | 100 | | |
| | A2b | | | | | | | | | | |
| | A3b | | | | | | | | | | |
| | A4b | 100 | | | | | | | | | |
| | A5b | | 100 | | | | | | | | |
| | A6b | | | | | 100 | | | | 100 | |
| | A7b | | | 100 | | | | | | | |
| | A8b | | | | 100 | | | | | | |
| Epoxy resin | B1 | 25 | 25 | 25 | 25 | 25 | | | | 25 | |
| | B2 | | | | | | | | | | |
| | B3 | | | | | | | | | | |
| | B4 | | | | | | | 25 | | | |
| | B5 | | | | | | | | 25 | | |
| Isocyanate crosslinking agent | C4 | 13 | 13 | 13 | 13 | 13 | 10 | 13 | 13 | 13 | |
| | C2 | | | | | | | | | | |
| | C5 | | | | | | | | | | |

### [Application of compounded liquid to film]

The compounded liquid of each Example was diluted to a solid content of 30 mass% with methyl ethyl ketone (MEK). In Example 1C, a diluted compounded liquid was applied to the entire surface of one side of a PET film (length: 210 mm, width: 150 mm, thickness: 100 µm, Lumirror: manufactured by PANAC Corporation), then dried at 100°C for 1 minute, and then left in an oven at 40°C for 48 hours. Thereby, a curing reaction proceeded, so that a PET film with an adhesive layer was prepared. The application was performed such that the adhesive layer had a thickness of 20 µm after drying. In Example 2C, application was performed in the same manner as in Example 1C, except that the PET film was replaced with a PEN film (length: 210 mm, width: 150 mm, thickness: 100 µm, Teonex: manufactured by Toyobo Film Solutions Ltd.). Further, in Example 3C, application was performed in the same manner as in Example 1C, except that the PET film was replaced with a PBT film (length: 210 mm, width: 150 mm, thickness: 25 µm, BOBLET: manufactured by KOHJIN Film & Chemicals Co., Ltd.). Further, in Examples 4C to 14C and Comparative Examples 1C to 5C, application was performed in the same manner as in Example 1C, except that the PET film was replaced with a PEN film as in Example 2C. In Comparative Example 4C, application was performed in the same manner as in Example 1C, except that the PET film was replaced with a PEN film as in Example 2C and no curing reaction in an oven at 40°C for 48 hours was performed.

### [Preparation of bonded sheet E]

Two films with adhesive layer of each Example were provided, and laminated such that the adhesive layers were brought into contact with each other. Using a laminator adjusted to 140°C, two films with adhesive layer of each Example were thermally press-bonded, so that a bonded sheet E of each Example was prepared. In Comparative Example 4C, the laminate was left in an oven at 40°C for 48 hours, so that a curing reaction was performed.

### [Preparation of bonded sheet F]

The film with adhesive layer in each Example was overlaid on a perfluorocarbon sulfonic acid resin sheet (tetrafluoroethylene/perfluoro[2-(fluorosulfonylethoxy)propyl vinyl ether] copolymer film (trade name "NAFIONN-115", manufactured by DuPont Inc)) (having the same shape as the film with adhesive layer), such that the exposed surface of the adhesive layer of the film with adhesive layer of each Example came into contact with one surface of the perfluorocarbon sulfonic acid resin sheet. Using a laminator adjusted to 140°C, the film with adhesive layer of each Example and the perfluorocarbon sulfonic acid resin sheet were laminated by thermal press-bonding, so that a bonded sheet F of each Example was prepared. In Comparative Example 4C, the laminate was left in an oven at 40°C for 48 hours, so that a curing reaction was performed.

### [Method for measuring adhesive strength]

An Autograph (Autograph AGS-J500N, manufactured by Shimadzu Corporation) was used to measure adhesive strength. In the test, a T-type peeling test with a tensile rate of 50 mm/min was performed under a temperature condition of 25°C.

### [Initial close contact 1]

The bonded sheet E of each Example was subjected to evaluation of initial close contact 1 using an Autograph. A test piece having sizes of 10 mm in width and 80 mm in length was cut out from the bonded sheet E of each Example, and subjected to measurement of adhesion strength using an Autograph. An adhesive strength value of 3 N/10 mm or more can be evaluated as sufficient adhesive strength, and an adhesive strength value of 4 N/10 mm or more can be evaluated as more sufficient adhesive strength. The same applies to the following. The measurement results are shown in the following Table 5. In the following Table 5, the unit of numerical values is N/10 mm.

### [Hot water resistance 1]

A test piece having sizes of 10 mm in width and 80 mm in length was cut out from the bonded sheet E of each Example. Each test piece was immersed in hot water at 95°C for 100 hours, cooled to room temperature, and then subjected to measurement of adhesion strength using an Autograph. The measurement results are shown in the following Table 5.

### [Acid resistance 1]

A test piece having sizes of 10 mm in width and 80 mm in length was cut out from the bonded sheet E of each Example. Each test piece was immersed in dilute sulfuric acid with a pH of 2 at 95°C for 100 hours, cooled to room temperature, and then subjected to measurement of adhesion strength using an Autograph. The measurement results are shown in the following Table 5.

### [Alcohol resistance 1]

A test piece having sizes of 10 mm in width and 80 mm in length was cut out from the bonded sheet E of each Example. Each test piece was immersed in ethylene glycol at 95°C for 100 hours, cooled to room temperature, and then subjected to measurement of adhesion strength using an Autograph. The measurement results are shown in the following Table 5.

### [Initial close contact 2]

The bonded sheet E of each Example was subjected to evaluation of initial close contact 2 using an Autograph. A test piece having sizes of 10 mm in width and 80 mm in length was cut out from the bonded sheet E of each Example, and subjected to measurement of adhesion strength using an Autograph. The measurement results are shown in the following Table 5.

### [Hot water resistance 2]

A test piece having sizes of 10 mm in width and 80 mm in length was cut out from the bonded sheet F of each Example. Each test piece was immersed in hot water at 95°C for 100 hours, cooled to room temperature, and then subjected to evaluation of hot water resistance based on the following criteria.
· Excellent: After the immersion, no peeling is observed.
· Good: After the immersion, no peeling is observed, though floats are partially observed.
· Unacceptable: After the immersion, peeling is observed.

The measurement results are shown in the following Table 5.

### [Acid resistance 2]

A test piece having sizes of 10 mm in width and 80 mm in length was cut out from the bonded sheet F of each Example. Each test piece was immersed in dilute sulfuric acid with a pH of 2 at 95°C for 100 hours, cooled to room temperature, and then subjected to evaluation of acid resistance based on the following criteria.
· Excellent: After the immersion, no peeling is observed.
· Good: After the immersion, no peeling is observed, though floats are partially observed.
· Unacceptable: After the immersion, peeling is observed.

The measurement results are shown in the following Table 5.

### [Alcohol resistance 2]

A test piece having sizes of 10 mm in width and 80 mm in length was cut out from the bonded sheet F of each Example. Each test piece was immersed in ethylene glycol at 95°C for 100 hours, cooled to room temperature, and then subjected to evaluation of alcohol resistance based on the following criteria.
· Excellent: After the immersion, no peeling is observed.
· Good: After the immersion, no peeling is observed, though floats are partially observed.
· Unacceptable: After the immersion, peeling is observed.

The measurement results are shown in the following Table 5.

### [Tack]

The surface of the adhesive layer of the film with hot-melt adhesive layer of each Example was touched with fingers to determine the tack according to the following criteria.
· Excellent: The surface remains smooth without sticking to fingers.
· Good: Finger marks remain without sticking to fingers.
· Unacceptable: Tack results in sticking to fingers.

The measurement results are shown in the following Table 5.

**[Table 5]**

| | Example | | | | | | | | | |
|---|---|---|---|---|---|---|---|---|---|---|
| | 1C | 2C | 3C | 4C | 5C | 6C | 7C | 8C | 9C | 10C |
| Initial close contact 1 | 6.23 | 7.14 | 6.01 | 5.20 | 4.90 | 5.50 | 5.96 | 6.18 | 4.30 | 6.05 |
| Hot water resistance 1 | 5.76 | 5.97 | 6.15 | 5.82 | 4.38 | 4.89 | 5.74 | 5.09 | 4.64 | 5.09 |
| Acid resistance 1 | 529 | 6.03 | 6.35 | 5.14 | 3.86 | 5.31 | 4.39 | 4.57 | 4.32 | 4.63 |
| Alcohol resistance 1 | 4.98 | 5.28 | 5.75 | 3.30 | 5.41 | 4.99 | 4.63 | 4.43 | 4.11 | 4.34 |
| Initial close contact 2 | 7.80 | 7.37 | 7.16 | 6.92 | 6.70 | 6.15 | 7.01 | 6.10 | 6.22 | 6.37 |
| Hot water resistance 2 | Excellent | Excellent | Excellent | Excellent | Excellent | Excellent | Excellent | Excellent | Excellent | Excellent |
| Acid resistance 2 | Excellent | Excellent | Excellent | Excellent | Excellent | Excellent | Excellent | Excellent | Excellent | Excellent |
| Alcohol resistance 2 | Excellent | Excellent | Excellent | Excellent | Excellent | Excellent | Excellent | Excellent | Excellent | Excellent |
| Tack | Excellent | Excellent | Excellent | Excellent | Excellent | Excellent | Excellent | Excellent | Excellent | Excellent |

| | Example | | | | Comparative Example | | | | | |
|---|---|---|---|---|---|---|---|---|---|---|
| | 11C | 12C | 13C | 14C | 1C | 2C | 3C | 4C | 5C | |
| Initial close contact 1 | 5.70 | 4.53 | 6.11 | 3.12 | 6.36 | 4.50 | 0.13 | 0.58 | 6.11 | |
| Hot water resistance 1 | 5.14 | 404 | 4.01 | 4.45 | 3.96 | 1.81 | Peeling | Peeling | 3.79 | |
| Acid resistance 1 | 4.53 | 4.25 | 3.43 | 4.76 | 2.76 | 1.20 | Peeling | Peeling | 3.30 | |
| Alcohol resistance 1 | 464 | 4.29 | 3.69 | 4.43 | 2.54 | 0.86 | Peeling | Peeling | 271 | |
| Initial close contact 2 | 6.37 | 7.42 | 6.38 | 3.57 | 8.15 | 1.24 | 0.20 | 0.76 | 7.49 | |
| Hot water resistance 2 | Excellent | Excellent | Excellent | Excellent | Excellent | Unacceptable | Unacceptable | Unacceptable | Excellent | |
| Acid resistance 2 | Excellent | Excellent | Excellent | Excellent | Acceptable | Unacceptable | Unacceptable | Unacceptable | Acceptable | |
| Alcohol resistance 2 | Excellent | Excellent | Excellent | Excellent | Acceptable | Unacceptable | Unacceptable | Unacceptable | Acceptable | |
| Tack | Excellent | Excellent | Excellent | Excellent | Excellent | Excellent | Excellent | Excellent | Unacceptable | |

From the results shown in Table 5, it is understood that the hot-melt adhesive of the present invention can be thermally press-bonded, being excellent in close contact to a substrate, with excellent hot water resistance, acid resistance, alcohol resistance, and tack.

## Claims

1. An adhesive comprising a polyurethane resin (A), an epoxy resin (B), and an isocyanate crosslinking agent (C),
wherein the epoxy resin (B) contains a hydroxyl group-containing epoxy resin that has an epoxy equivalent of 450 g/eq or more and 3000 g/eq or less and that has a hydroxy group.

2. The adhesive according to claim 1,
wherein the hydroxyl group-containing epoxy resin has a hydroxyl value of 50 mg KOH/g or more and 250 mg KOH/g or less.

3. The adhesive according to claim 1 or 2,
wherein a temperature at which a mass change of 50 mass% is observed in thermogravimetric differential thermal analysis (TG-DTA) is 300°C or more.

4. The adhesive according to any one of claims 1 to 3,
wherein the polyurethane resin (A) has a carboxyl group, and
has an acid value of 5 mg KOH or more and 30 mg KOH/g or less.

5. The adhesive according to any one of claims 1 to 4,
wherein the polyurethane resin (A) has a carbonate diol as a structural unit.

6. The adhesive according to claim 1,
wherein the polyurethane resin (A) has a structural unit derived from a polyol (a1) with a skeleton having 8 or more carbon atoms, and
the adhesive is used as a hot-melt adhesive containing a crosslinked product of an adhesive composition containing a crosslinking agent.

7. The adhesive according to any one of claims 1 to 6,
wherein the polyurethane resin (A) contains a hydroxyl group-containing polyurethane resin having a hydroxyl group at a terminal, and
the hydroxyl group-containing polyurethane resin has a hydroxyl value of 0.1 mg KOH/g or more and 20 mg KOH/g or less.

8. The adhesive according to any one of claims 1 to 7,
wherein the polyurethane resin (A) has an aromatic diisocyanate as a structural unit.

9. The adhesive according to any one of claims 1 to 8,
wherein the epoxy resin (B) is contained in an amount of 10 parts by mass or more and 100 parts by mass or less based on 100 parts by mass of the polyurethane resin (A).

10. The adhesive according to any one of claims 1 to 9,
wherein the polyurethane resin (A) has a mass average molecular weight (Mw) of 1000 or more and 100000 or less.

11. The adhesive according to any one of claims 1 to 10,
wherein the isocyanate crosslinking agent (C) is contained in an amount of 2 parts by mass or more and 50 parts by mass or less based on 100 parts by mass of the polyurethane resin (A) and the epoxy resin (B).

12. The adhesive according to any one of claims 1 to 5 or any one of claims 7 to 11 which depend from any one of claims 1 to 5,
wherein the adhesive is used for bonding one resin film selected from the group consisting of a polyethylene terephthalate film, a polyethylene naphthalate film and a polybutylene terephthalate film, to an aramid paper.

13. The adhesive according to claim 6 or any one of claims 7 to 11 which depend from claim 6,
wherein the adhesive is used for bonding a member at least a surface of which is made of resin, and
the resin is at least one selected from the group consisting of a polyethylene terephthalate resin, a polyethylene naphthalate resin, and a polybutylene terephthalate resin.

14. The adhesive according to claim 6 or any one of claims 7 to 11 which depend from claim 6,
wherein the adhesive is used for bonding a first member and a second member,
at least a surface to be bonded of each of the first member and the second member is made of resin,
the resin in the first member is at least one selected from the group consisting of a polyethylene terephthalate resin, a polyethylene naphthalate resin, and a polybutylene naphthalate resin, and
the resin in the second member is a perfluorocarbonsulfonic acid resin.
